# EUROPEAN PATENT APPLICATION

(11) **EP 4 560 974 A1**
(43) Date of publication of application: **28.05.2025**
(21) Application number: 23858594.7
(22) Date of filing: 14.03.2023
(51) Int. Cl.: H04L 9/32

(54) **DATA PROCESSING METHOD AND RELATED DEVICES**

(30) Priority: 31.08.2022 CN 202211063836
(71) Applicant: Huawei Cloud Computing Technologies Co., Ltd., Guiyang, Guizhou 550025 (CN)
(72) Inventor: ZHANG, Ziyi, Guiyang, Guizhou 550025 (CN); QU, Qiang, Guiyang, Guizhou 550025 (CN); DU, Mingxiao, Guiyang, Guizhou 550025 (CN); YU, Yue, Guiyang, Guizhou 550025 (CN)
(74) Representative: Goddar, Heinz J.
(86) International application number: PCT/CN2023/081446
(87) International publication number: WO 2024/045552

(57) **Abstract**

This application provides a data processing method, applied to a distributed data management system. The system includes a plurality of data management apparatuses, and each data management apparatus corresponds to one blockchain node in a blockchain network. The method includes: A target data management apparatus in the plurality of data management apparatuses receives a transaction request from a blockchain client, where the transaction request includes identifiers of transaction participants. The target data management apparatus performs input/output I/O, in the blockchain network based on the transaction request, on a transaction information ciphertext obtained by encrypting a transaction information plaintext by using a key that is invisible to a participant other than the transaction participant, and then returns a transaction result to the blockchain client. **In** the method, the transaction participant is specified in the transaction request, and a privacy transaction such as privacy write or privacy query is implemented based on a blockchain, so that chaincode and service code that need to be developed to shield private data chaining from a user are implemented, and an application scope and usability of the blockchain network are improved.

## Description

This application claims priority to Chinese Patent Application No. 202211063836.7, filed with the China National Intellectual Property Administration on August 31, 2022 and entitled "DATA PROCESSING METHOD AND RELATED DEVICE", which is incorporated herein by reference in its entirety.

### TECHNICAL FIELD

This application relates to the field of blockchain technologies, and in particular, to a data processing method, a distributed data management system, a data management apparatus, a computing device cluster, a computer-readable storage medium, and a computer program product.

### BACKGROUND

The blockchain (blockchain) technology is a decentralized architecture and computing paradigm that uses a blockchain data structure to verify and store data, uses a distributed node consensus algorithm to generate and update data, uses cryptography to ensure data transmission and access security, and uses a smart contract consisting of automation script code to program and manipulate data.

Each participant in a blockchain has a same ledger, and information of each participant is publicly visible to another participant. As the blockchain is increasingly applied, more organizations can share data on a main chain as participants.

However, there may be some unique transaction requirements between different participants. Specifically, transaction information between transaction participants is not disclosed to a non-transaction participant on the chain. Constructing an additional blockchain between the transaction participants needs to consume a large quantity of resources. How to implement privacy protection of a transaction between the transaction participants in an open blockchain network becomes a research hotspot.

### SUMMARY

This application provides a data processing method. In the method, a transaction participant is specified in a transaction request, and a privacy transaction such as privacy write or privacy query is implemented based on a blockchain, without a need of additionally compiling chaincode or updating chaincode each time, so that chaincode and service code that need to be developed to shield private data chaining from a user are implemented, operation complexity is reduced, and an application scope and usability of a blockchain network are improved. In addition, in the method, a private key does not need to be transferred offline, to avoid a privacy leakage risk caused by private key leakage. This application further provides a distributed data management system, a data management apparatus, a computing device cluster, a computer-readable storage medium, and a computer program product corresponding to the foregoing method.

According to a first aspect, this application provides a data processing method. The method is applied to a distributed data management system. The distributed data management system includes a plurality of data management apparatuses, a first data management apparatus in the plurality of data management apparatuses corresponds to a first blockchain node in a blockchain network, and a second data management apparatus in the plurality of data management apparatuses corresponds to a second blockchain node in the blockchain network.

Specifically, a target data management apparatus in the plurality of data management apparatuses receives a transaction request from a blockchain client, where the transaction request includes identifiers of transaction participants. Then, the target data management apparatus performs input/output (input/output, I/O) on a transaction information ciphertext in the blockchain network based on the transaction request, where the transaction information ciphertext is obtained by encrypting a transaction information plaintext by using a key that is invisible to a participant other than the transaction participant. Then, the target data management apparatus returns a transaction result to the blockchain client.

In the method, the transaction participant is specified in the transaction request, and a privacy transaction such as privacy write or privacy query is implemented based on a blockchain, without a need of additionally compiling chaincode or updating chaincode each time, so that chaincode and service code that need to be developed to shield private data chaining from a user are implemented, operation complexity is reduced, and an application scope and usability of the blockchain network are improved. In the method, a private key does not need to be transferred offline, to avoid a privacy leakage risk caused by private key leakage.

In addition, in the method, an adapted distributed data management system (also referred to as a distributed privacy protection engine) is provided for a decentralized system such as the blockchain network, to meet a decentralized privacy protection capability requirement, and resolve a problem that a centralized system cannot meet a distributed management requirement and causes a risk of evil behavior of a manager in centralized management. In addition, the distributed data management system efficiently utilizes performance of a current blockchain based on performance of a blockchain system in a manner of encrypting transaction information.

In some possible implementations, a blockchain node in the blockchain network includes a blockchain ledger, and the blockchain ledger is a distributed public ledger. The target data management apparatus may perform I/O on the transaction information ciphertext in the blockchain ledger based on the transaction request.

In this way, an operation of performing I/O on the transaction information ciphertext by the target data management apparatus in the blockchain ledger may be recorded in the blockchain, to facilitate subsequent tracing and ensure data security.

In some possible implementations, the target data management apparatus is mounted with a local storage, and the local storage includes a private ledger of the blockchain network. The private ledger is maintained by the target data management apparatus. Specifically, the target data management apparatus may perform I/O on the transaction information ciphertext in the private ledger of the blockchain network based on the transaction request.

In comparison with performing I/O on the transaction information ciphertext in the blockchain ledger of the blockchain network, performing I/O on the transaction information ciphertext in the private ledger does not need to reach a consensus among blockchain nodes in the blockchain network, has higher efficiency, and can meet a transaction requirement.

In some possible implementations, the transaction request is a storage request, and the transaction request includes the transaction information plaintext. Correspondingly, the target data management apparatus may encrypt the transaction information plaintext by using a chain key of a transaction initiator in the transaction participants in a privacy transaction group, to obtain a first transaction information ciphertext, and store the first transaction information ciphertext in a blockchain ledger. The target data management apparatus encrypts the transaction information plaintext by using a public key or a symmetric key of the transaction initiator in the transaction participants, to obtain a second transaction information ciphertext, and stores the second transaction information ciphertext in the private ledger.

In the method, the transaction information ciphertext is separately encrypted, and then stored in the blockchain ledger and the private ledger. When data in the private ledger is lost or tampered with, the data may be further restored based on the blockchain ledger, to further improve data storage reliability.

In some possible implementations, the transaction request is a query request. The target data management apparatus may further read the transaction information ciphertext from the private ledger or a blockchain ledger based on the transaction request, and then the target data management apparatus may decrypt the transaction information ciphertext to obtain the transaction information plaintext. The transaction result may include the transaction information plaintext.

In the method, the transaction information ciphertext is invisible to a non-transaction participant. After obtaining the transaction information ciphertext, the target data management apparatus decrypts the transaction information ciphertext, includes the transaction information ciphertext in the transaction result, and returns the transaction result to the blockchain client, to implement privacy query.

In some possible implementations, before performing I/O on the transaction information ciphertext in the blockchain network based on the transaction request, the target data management apparatus may further obtain, through agreement via the blockchain network, the chain key of the transaction initiator in the transaction participants in the privacy transaction group. The key that is invisible to the participant other than the transaction participant includes the chain key.

In this way, the transaction participant in the privacy transaction group may implement an encrypted session by using the chain key, and the participant other than the transaction participant in the blockchain network (for example, a consortium blockchain) cannot perform decryption, to ensure transaction security.

In some possible implementations, the target data management apparatus further supports chain key update. Specifically, when a key update condition is triggered, the target data management apparatus may update the chain key by using a double ratchet algorithm. **In** this way, a replay attack can be avoided, and security is further improved.

In some possible implementations, the key update condition includes that a quantity of transactions based on the chain key reaches a preset quantity. A maximum quantity of transactions corresponding to the chain key is set, so that an attacker can be prevented from obtaining the chain key and continuously performing an encrypted session by using the chain key, to narrow down an attack scope.

In some possible implementations, before performing I/O on the transaction information ciphertext in the blockchain network based on the transaction request, the target data management apparatus may further receive a public-private key pair issued by a certificate authority node to the transaction initiator in the transaction participants. The key that is invisible to the participant other than the transaction participant includes a public key in the public-private key pair.

The transaction participants in the privacy transaction group may disclose respective public keys in the group. The public key is invisible to another participant in the blockchain network, and the participant other than the transaction participant in the blockchain network cannot decrypt a ciphertext encrypted by using the public key. Therefore, privacy transaction can be implemented, and privacy security can be ensured.

In some possible implementations, the target data management apparatus is mounted with the local storage, and the local storage includes the private ledger of the blockchain network. The target data management apparatus may obtain, from the private ledger, first meta information of data stored in the private ledger, and obtain, from the blockchain ledger of the blockchain network, second meta information of the data stored in the private ledger. Then, the target data management apparatus performs fault check based on the first meta information and the second meta information, to obtain a fault check result.

In the method, the target data management apparatus scans meta information in a local private ledger and a local blockchain ledger, and compares the meta information, to determine whether the local storage is faulty or whether data in the private ledger in the local storage is deleted or tampered with. Therefore, efficient fault check is implemented, a fault can be quickly located, and a service requirement is met.

In some possible implementations, when the fault check result indicates that the data stored in the private ledger is tampered with or deleted, or a storage mounted to the target data management apparatus is faulty, the target data management apparatus may further perform fault recovery based on the blockchain ledger.

In the method, when the data stored in the private ledger is tampered with or deleted, or the storage mounted to the target data management apparatus is faulty, the target data management apparatus may perform fault recovery based on the data stored in the blockchain ledger, to maintain data consistency.

In some possible implementations, the target data management apparatus may provide a storage interface or a query interface. Correspondingly, the blockchain client may invoke the storage interface to generate the storage request, or invoke the query interface to generate the query request. In the method, a unified interface for privacy data storage (uploading and chaining) or querying (downloading) is provided, and there is no need to separately develop the chaincode and the service code for the privacy data chaining and querying. This reduces the operation complexity, and improves an application scope and usability of the blockchain system.

In some possible implementations, the transaction request is the query request. The target data management apparatus reads the transaction information ciphertext from the private ledger based on the transaction request, and decrypts the transaction information ciphertext to obtain the transaction information plaintext. A hash value of the transaction information plaintext is compared with a hash value that is of the transaction information plaintext of the transaction and that is stored in the blockchain network. If the hash values are consistent, the transaction information plaintext is carried in the transaction result.

In the method, the target data management apparatus supports verification on the privacy data queried from the private ledger and on-chain data, to ensure that the privacy data is not tampered with.

**In** some possible implementations, when a transaction participant exits from the privacy transaction group, the target data management apparatus does not need to update the chain key, and the target data management apparatus may reuse the chain key to perform a privacy transaction in a privacy transaction group formed by remaining transaction participants. Privacy transaction security is ensured, and in addition, the chain key does not need to be updated, to reduce the operation complexity.

According to a second aspect, this application provides a distributed data management system. The distributed data management system includes a plurality of data management apparatuses, a first data management apparatus in the plurality of data management apparatuses corresponds to a first blockchain node in a blockchain network, and a second data management apparatus in the plurality of data management apparatuses corresponds to a second blockchain node in the blockchain network.

A target data management apparatus in the plurality of data management apparatuses is configured to receive a transaction request from a blockchain client. The transaction request includes identifiers of transaction participants.

The target data management apparatus is further configured to: perform input/output I/O on a transaction information ciphertext in the blockchain network based on the transaction request, where the transaction information ciphertext is obtained by encrypting a transaction information plaintext by using a key that is invisible to a participant other than the transaction participant, and return a transaction result to the blockchain client.

In some possible implementations, a blockchain node in the blockchain network includes a blockchain ledger.

The target data management apparatus is specifically configured to:
perform I/O on the transaction information ciphertext in the blockchain ledger based on the transaction request.

In some possible implementations, the target data management apparatus is mounted with a local storage, and the local storage includes a private ledger of the blockchain network.

The target data management apparatus is specifically configured to:
perform I/O on the transaction information ciphertext in the private ledger based on the transaction request.

In some possible implementations, the transaction request is a storage request, and the transaction request includes the transaction information plaintext.

The target data management apparatus is specifically configured to:
encrypt the transaction information plaintext by using a chain key of a transaction initiator in the transaction participants in a privacy transaction group, to obtain a first transaction information ciphertext, and store the first transaction information ciphertext in a blockchain ledger; and
encrypt the transaction information plaintext by using a public key or a symmetric key of the transaction initiator in the transaction participants, to obtain a second transaction information ciphertext, and store the second transaction information ciphertext in the private ledger.

In some possible implementations, the transaction request is a query request.

The target data management apparatus is specifically configured to:
read the transaction information ciphertext from the private ledger or a blockchain ledger based on the transaction request.

The method further includes:
The target data management apparatus decrypts the transaction information ciphertext to obtain the transaction information plaintext.

The transaction result includes the transaction information plaintext.

In some possible implementations, the target data management apparatus is further configured to:
before performing input/output I/O on the transaction information ciphertext in the blockchain network based on the transaction request, obtain, through agreement via the blockchain network, the chain key of the transaction initiator in the transaction participants in the privacy transaction group.

The key that is invisible to the participant other than the transaction participant includes the chain key.

In some possible implementations, the target data management apparatus is further configured to:
when a key update condition is triggered, update the chain key by using a double ratchet algorithm.

In some possible implementations, the key update condition includes:
A quantity of transactions based on the chain key reaches a preset quantity.

In some possible implementations, the target data management apparatus is further configured to:
before performing input/output I/O on the transaction information ciphertext in the blockchain network based on the transaction request, receive a public-private key pair issued by a certificate authority node to the transaction initiator in the transaction participants.

The key that is invisible to the participant other than the transaction participant includes a public key in the public-private key pair.

In some possible implementations, the target data management apparatus is mounted with the local storage, and the local storage includes the private ledger of the blockchain network.

The target data management apparatus is further configured to:
obtain, from the private ledger, first meta information of data stored in the private ledger, and obtain, from the blockchain ledger of the blockchain network, second meta information of the data stored in the private ledger; and
perform fault check based on the first meta information and the second meta information, to obtain a fault check result.

In some possible implementations, the target data management apparatus is further configured to:
when the fault check result indicates that the data stored in the private ledger is tampered with or deleted, or a storage mounted to the target data management apparatus is faulty, perform fault recovery based on the blockchain ledger.

According to a third aspect, this application provides a data management apparatus. The data management apparatus corresponds to a blockchain node in a blockchain network, and the data management apparatus includes:
a communication module, configured to receive a transaction request from a blockchain client, where the transaction request includes identifiers of transaction participants; and
a management module, configured to perform input/output I/O on a transaction information ciphertext in the blockchain network based on the transaction request, where the transaction information ciphertext is obtained by encrypting a transaction information plaintext by using a key that is invisible to a participant other than the transaction participant.

The communication module is further configured to return a transaction result to the blockchain client.

In some possible implementations, the blockchain node in the blockchain network includes a blockchain ledger.

The management module is specifically configured to:
perform I/O on the transaction information ciphertext in the blockchain ledger based on the transaction request.

In some possible implementations, the data management apparatus is mounted with a local storage, and the local storage includes a private ledger of the blockchain network.

The management module is specifically configured to:
perform I/O on the transaction information ciphertext in the private ledger based on the transaction request.

In some possible implementations, the transaction request is a storage request, and the transaction request includes the transaction information plaintext.

The management module is specifically configured to:
encrypt the transaction information plaintext by using a chain key of a transaction initiator in the transaction participants in a privacy transaction group, to obtain a first transaction information ciphertext, and store the first transaction information ciphertext in a blockchain ledger; and
encrypt the transaction information plaintext by using a public key or a symmetric key of the transaction initiator in the transaction participants, to obtain a second transaction information ciphertext, and store the second transaction information ciphertext in the private ledger.

In some possible implementations, the transaction request is a query request.

The management module is specifically configured to:
read the transaction information ciphertext from the private ledger or a blockchain ledger based on the transaction request.

The management module is further configured to:
decrypt the transaction information ciphertext to obtain the transaction information plaintext.

The transaction result includes the transaction information plaintext.

In some possible implementations, the management module is further configured to:
before performing input/output I/O on the transaction information ciphertext in the blockchain network based on the transaction request, obtain, through agreement via the blockchain network, the chain key of the transaction initiator in the transaction participants in the privacy transaction group.

The key that is invisible to the participant other than the transaction participant includes the chain key.

In some possible implementations, the management module is further configured to:
when a key update condition is triggered, update the chain key by using a double ratchet algorithm.

In some possible implementations, the key update condition includes:
A quantity of transactions based on the chain key reaches a preset quantity.

In some possible implementations, the communication module is further configured to:
receive a public-private key pair issued by a certificate authority node to the transaction initiator in the transaction participants.

The key that is invisible to the participant other than the transaction participant includes a public key in the public-private key pair.

In some possible implementations, the data management apparatus is mounted with the local storage, and the local storage includes the private ledger of the blockchain network.

The communication module is further configured to:
obtain, from the private ledger, first meta information of data stored in the private ledger, and obtain, from the blockchain ledger of the blockchain network, second meta information of the data stored in the private ledger.

The apparatus further includes:
a fault check module, configured to perform fault check based on the first meta information and the second meta information, to obtain a fault check result.

In some possible implementations, the apparatus further includes:
a fault recovery module, configured to: when the fault check result indicates that the data stored in the private ledger is tampered with or deleted, or a storage mounted to the data management apparatus is faulty, perform fault recovery based on the blockchain ledger.

According to a fourth aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the data processing method according to any one of the first aspect or the implementations of the first aspect.

According to a fifth aspect, this application provides a computer-readable storage medium. The computer-readable storage medium stores instructions, and the instructions instruct a computing device or a computing device cluster to perform the data processing method according to any one of the first aspect or the implementations of the first aspect.

According to a sixth aspect, this application provides a computer program product including instructions. When the computer program product runs on a computing device or a computing device cluster, the computing device or the computing device cluster is enabled to perform the data processing method according to any one of the first aspect or the implementations of the first aspect.

Based on the implementations provided in the foregoing aspects, further combination may be performed in this application to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of an architecture of a distributed data management system according to an embodiment of this application;
FIG. 2 is a diagram of an architecture of a distributed data management system according to an embodiment of this application;
FIG. 3 is a diagram of an architecture of a distributed data management system in a multi-scenario consortium according to an embodiment of this application;
FIG. 4 is a flowchart of a data processing method according to an embodiment of this application;
FIG. 5 is a diagram of a key chain according to an embodiment of this application;
FIG. 6 is a diagram of an application scenario of a data processing method according to an embodiment of this application;
FIG. 7 is a schematic flowchart of initialization of a distributed data management system according to an embodiment of this application;
FIG. 8 is a schematic flowchart of group creation according to an embodiment of this application;
FIG. 9 is a schematic flowchart of privacy transaction initiation according to an embodiment of this application;
FIG. 10 is a schematic flowchart of privacy transaction synchronization according to an embodiment of this application;
FIG. 11 is a schematic flowchart of privacy transaction query according to an embodiment of this application;
FIG. 12 is a diagram of a structure of a distributed data management system according to an embodiment of this application;
FIG. 13 is a diagram of a structure of a computing device according to an embodiment of this application;
FIG. 14 is a diagram of a structure of a computing device cluster according to an embodiment of this application;
FIG. 15 is a diagram of a structure of a computing device cluster according to an embodiment of this application; and
FIG. 16 is a diagram of a structure of a computing device cluster according to an embodiment of this application.

### DESCRIPTION OF EMBODIMENTS

In embodiments of this application, the terms "first" and "second" are merely used for a purpose of description, and shall not be understood as an indication or implication of relative importance or implicit indication of a quantity of indicated technical features. Therefore, a feature limited by "first" or "second" may explicitly or implicitly include one or more of the features.

Some technical terms in embodiments of this application are first described.

A blockchain network may also be briefly referred to as a blockchain, and is a peer-to-peer (peer-to-peer, P2P) network constructed based on a blockchain technology. The blockchain network includes a plurality of blockchain nodes, and each blockchain node is a peer node. In the blockchain network, the plurality of blockchain nodes jointly maintain a blockchain ledger that continuously grows and that is constructed by ordered data blocks. The blockchain node each store a copy of the blockchain ledger, and maintain consistency between copies. Therefore, the blockchain ledger is a public ledger of the blockchain network.

There may be some unique transaction requirements between different participants in the blockchain network. Specifically, transaction information between transaction participants is not disclosed to a non-transaction participant on the chain. Considering that costs of reconstructing a new blockchain are high, end-to-end encryption (end-to-end encryption, E2EE) may be performed on the transaction information, to meet the foregoing transaction requirement and implement transaction privacy protection.

The end-to-end encryption is a communication system in which only a user participating in communication can read information. The end-to-end encryption can prevent potential eavesdroppers, including but not limited to a telecommunication provider, an Internet service provider, and a provider of the communication system, from obtaining a plaintext of communication between two parties. Such systems are designed to prevent a potential monitoring or tampering attempt.

For ease of understanding, this application provides a specific example for description. In this example, the blockchain network includes a participant A, a participant B, a participant C, and a participant D. The participant A, the participant B, and the participant C perform transactions. For example, when the participant A shares data with the participant B and the participant C, the participant A may perform end-to-end encryption on the data, to share the data with the participant B and the participant C, and keep the data confidential from the participant D.

Currently, zero knowledge proof is usually used in the industry to perform privacy protection on the transaction information. For ease of understanding, a ticket scenario is used as an example for description. A blockchain client may generate zero knowledge proof information, and then initiate chaining verification. A blockchain node performs validity verification on the zero knowledge proof information. If the verification succeeds, the blockchain node performs a privacy transaction with a pre-established privacy ticket pool. The privacy ticket pool is used to store a to-be-transacted privacy ticket.

However, in the foregoing solution, when a transaction participant changes, a smart contract needs to be changed to upgrade chaincode. For example, when the participant A and the participant B perform a privacy transaction, chaincode needs to be upgraded, to specify the participant A and the participant B to perform the privacy transaction. In this case, performance of the blockchain network is greatly reduced, transaction efficiency is affected, and availability of the blockchain network is further affected.

In view of this, embodiments of this application provide a data processing method. The method may be applied to a distributed data management system. The distributed management system includes a plurality of data management apparatuses. Each data management apparatus is a part of the distributed data management system. The distributed data management system is essentially a distributed storage engine, and is mainly configured to perform privacy protection on data such as transaction information. Therefore, the distributed data management system may also be referred to as a distributed privacy protection engine, and the data management apparatus in the distributed data management system is a part of the distributed privacy protection engine. A first data management apparatus in the plurality of data management apparatuses corresponds to a first blockchain node in a blockchain network, and a second data management apparatus in the plurality of data management apparatuses corresponds to a second blockchain node in the blockchain network.

Specifically, a target data management apparatus in the plurality of data management apparatuses receives a transaction request from a blockchain client, where the transaction request includes identifiers of transaction participants. Then, the target data management apparatus performs input/output (input/output, I/O) on a transaction information ciphertext in the blockchain network based on the transaction request, where the transaction information ciphertext is obtained by encrypting a transaction information plaintext by using a key that is invisible to a participant other than the transaction participant. Then, the target data management apparatus returns a transaction result to the blockchain client.

In the method, the transaction participant is specified in the transaction request, and a privacy transaction such as privacy write or privacy query is implemented based on a blockchain, without a need of additionally compiling chaincode or updating chaincode each time, so that the chaincode and service code that need to be developed to shield private data chaining from a user are implemented, operation complexity is reduced, and an application scope and usability of the blockchain network are improved. In addition, in the method, a private key does not need to be transferred offline, to avoid a privacy leakage risk caused by private key leakage.

In the method, an adapted distributed data management system (also referred to as a distributed privacy protection engine) is provided for a decentralized system such as the blockchain network, to meet a decentralized privacy protection capability requirement, and resolve a problem that a centralized system cannot meet a distributed management requirement and causes a risk of evil behavior of a manager in centralized management. In addition, the distributed data management system efficiently utilizes performance of a current blockchain based on performance of a blockchain system in a manner of encrypting the transaction information.

To make the technical solutions of this application clearer and easier to understand, the following describes system architectures in embodiments of this application with reference to the accompanying drawings.

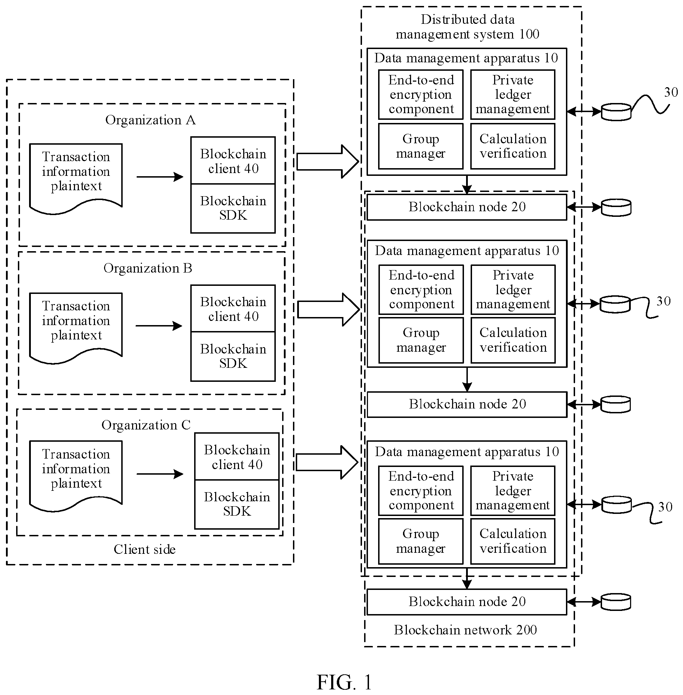

Refer to a diagram of an architecture of a distributed data management system shown in FIG. 1. The distributed data management system 100 includes a plurality of data management apparatuses 10, and each of the plurality of data management apparatuses 10 corresponds to one blockchain node 20 in a blockchain network 200. For example, a first data management apparatus corresponds to a first blockchain node, and a second data management apparatus corresponds to a second blockchain node.

Further, each data management apparatus 10 may be mounted with a local storage 30. It should be noted that the data management apparatus 10 in this embodiment of this application supports management and adaptation of different storage media. For example, the data management apparatus 10 may be mounted with different storage media, including but not limited to a hard disk drive (hard disk drive, HDD) or a solid-state drive (solid-state drive, SDD). The blockchain node 20 includes a blockchain ledger (which is a public ledger) of the blockchain network 200, and the local storage 30 includes a private ledger of the blockchain network 200.

In the example in FIG. 1, the data management apparatus 10 may be further connected to a blockchain client 40. A participant of a blockchain, for example, a cloud tenant or an off-cloud user, may initiate a transaction by using the blockchain client 40. For example, the participant of the blockchain may share privacy data with a specified participant or query privacy data by using the blockchain client.

During specific implementation, a target data management apparatus in the plurality of data management apparatuses 10 may receive a transaction request from the blockchain client 40. The transaction request includes identifiers (identifiers, ID) of transaction participants. For example, when the transaction participants include a participant A (for example, an organization A) and a participant B (for example, an organization B), the transaction request may include an identifier of the organization A and an identifier of the organization B.

Then, the target data management apparatus performs I/O on a transaction information ciphertext in the blockchain network 200 based on the transaction request. When the transaction request is a storage request, the transaction information ciphertext may be stored in the blockchain ledger and the private ledger of the blockchain network 200. When the transaction request is a query request, the transaction information ciphertext may be queried in the private ledger of the blockchain network 200. When the transaction information ciphertext is not found in the private ledger, the transaction information ciphertext may be further queried in the blockchain ledger. The transaction information ciphertext may be obtained by encrypting a transaction information plaintext by using a key that is invisible to a participant (for example, an organization C) other than the transaction participant.

In some possible implementations, a transaction information ciphertext stored in the public ledger and a transaction information ciphertext stored in the private ledger may be obtained through encryption by using different keys. For example, the transaction information ciphertext stored in the public ledger may also be referred to as a first transaction information ciphertext, and may be obtained through encryption by using a chain key that is of a transaction initiator in a privacy transaction group and that is obtained through agreement based on the blockchain network 200. The transaction information ciphertext stored in the private ledger is also referred to as a second transaction information ciphertext, and may be obtained through encryption by using a public key in a public-private key pair issued by a certificate authority (certificate authority, CA) node to the transaction initiator in the transaction participants.

Then, the target data management apparatus returns a transaction result to the blockchain client 40. For different transaction requests, transaction results may be different. For example, when the transaction request is the storage request (which may also be referred to as a data chaining request or a data upload request), the transaction result may be a transaction success notification, to indicate a storage success. For another example, when the transaction request is the query request (which may also be referred to as a data download request), the transaction result may include a found transaction information plaintext. The transaction information plaintext may be obtained through decryption by the target data management apparatus on the transaction information ciphertext.

It should be noted that, in addition to the blockchain client 40, a client side may further include a blockchain software development toolkit (software development toolkit, SDK). The blockchain SDK is configured to: receive a transaction request, for example, a request for storing the privacy data or a query request for querying the privacy data, be loaded on the client side to process obtaining of the privacy data, group and identity verification calculation, submit the privacy data to the distributed data management system 100 side, and further interact with the blockchain node 200.

The data management apparatus 10 of the distributed data management system 100 may include an end-to-end encryption component, to encrypt the transaction information plaintext. The end-to-end encryption component is configured for, including optimization of a signal algorithm and rectification of blockchain integration. The end-to-end encryption component completes an entire process of key agreement (for example, chain key agreement) based on the blockchain network 200, replaces a centralized system or a centralized node to distribute a key, and uses a capability of the end-to-end encryption component to build a highly secure group transaction capability.

The data management apparatus 10 may further include a group manager. The group manager is configured to calculate related group information for an organization (which may also be referred to as a participant or a member) corresponding to each data management apparatus 10. For example, the group manager checks a privacy transaction group, creates a privacy transaction group, and deletes a privacy transaction group. Further, the group manager may further trigger generation and storage of the key. For example, the group manager may trigger generation and storage of one or more of a chain key, a temporary public-private key pair, and a symmetric key.

Further, the data management apparatus 10 may further include private ledger management. The private ledger management may support local storage of privacy data of different participants and building of a privacy data quick query capability. **In** addition, the module can also support a local data rebuilding capability from the blockchain ledger when data is lost. The data management apparatus 10 may further include calculation verification. The calculation verification is configured to support identity verification, group comparison, and local storage information and on-chain storage information comparison.

Modules such as the end-to-end encryption component, the private ledger management, the group manager, and the calculation verification are combined to construct a highly available distributed data management system 100 based on the blockchain network 200.

In this solution, all interaction with the privacy data (transaction information identified as privacy) needs to be performed by using the data management apparatus 10 (a part of a distributed privacy protection engine), and the data management apparatus 10 records an interaction history, and shares a public key and an encryption key based on a chain, to improve data security and accessibility, and operation traceability. In addition, an end-to-end encryption technology is integrated into the distributed privacy protection engine. Agreement on a public key and an encryption key that are needed for end-to-end encryption can be supported by using the blockchain, an algorithm procedure of the distributed privacy protection engine is optimized, and forward security (forward security, FS) and backward security (backward security, BS) capabilities of the distributed privacy protection engine are implemented based on the blockchain. Forward security can protect past communication from a threat of future exposure of a password or a key. Backward security protects future communication from a threat of current exposure of a passwords or a key.

It should be noted that the data management apparatus 10 shown in FIG. 1 may be a software apparatus, and the software apparatus may be deployed on another computing device independent of the blockchain node. The data management apparatus shown in FIG. 1 may alternatively be a hardware apparatus. For example, the hardware apparatus may be a computing device that is independent of the blockchain node 20 and that has a privacy protection function.

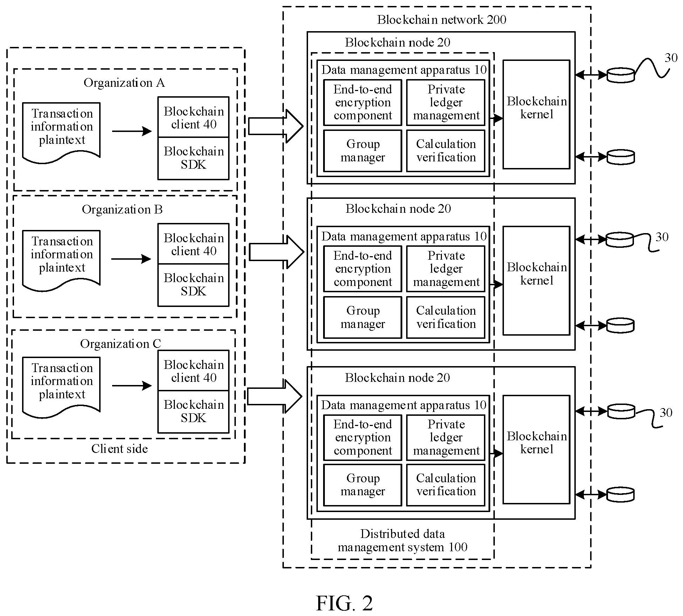

In some possible implementations, refer to a diagram of an architecture of a distributed data management system 100 shown in FIG. 2. Each data management apparatus 10 of the distributed data management system 100 may alternatively be deployed on a blockchain node 20. In other words, the blockchain node 20 includes a blockchain kernel and the data management apparatus 10. The data management apparatus 10 may be middleware or a component, and the middleware or the component may be integrated into the blockchain node 20.

The distributed data management system 100 in this embodiment of this application is a system that integrates a blockchain and end-to-end encryption and that is designed for a blockchain in a consortium blockchain scenario or an open consortium blockchain scenario in which user data is open to all participants on the chain, but some users expect to define a privacy transaction or privacy information by specifying a transaction participant. The system provides a distributed privacy protection component (for example, the data management apparatus 10), to support key management and privacy data storage of different users, implement organization-level user privacy protection, and improve convenience of chaining and querying user privacy protection data based on an embedded group management capability.

The distributed data management system 100 may be used in industries such as finance, energy, government affairs, aviation, agriculture, people's livelihood, and logistics. For example, the distributed data management system 100 may be used in scenarios such as commodity purchase and sale and a non-fungible token (Non-fungible token, NFT) transaction. In addition, the distributed data management system 100 may be used as a distributed storage bottom layer, and supports metaverse or Web 3.0.

When the distributed data management system 100 is used in the foregoing scenarios, the distributed data management system 100 supports being deployed in a private cloud, a public cloud, a hybrid cloud, or an edge node. In the public cloud, a cloud service provider provides a cloud service for a user through a public Internet (Internet), and the user may access the cloud and enjoy various services, including but not limited to computing, storage, a network, and the like, through the Internet. The private cloud is a cloud computing usage mode built by an enterprise to provide a service for the enterprise. The private cloud is built for use by an enterprise alone and may be deployed in a data center of the enterprise or in an equipment room of the cloud service provider. The hybrid cloud is a cloud computing mode that combines the private cloud and the public cloud. The edge node is relative to a cloud computing data center, and is a network node that has few intermediate links with a final access user. The edge node may be an equipment room or a physical device. In comparison with accessing an origin server directly, accessing the edge node by the user has a better response capability and a better connection speed.

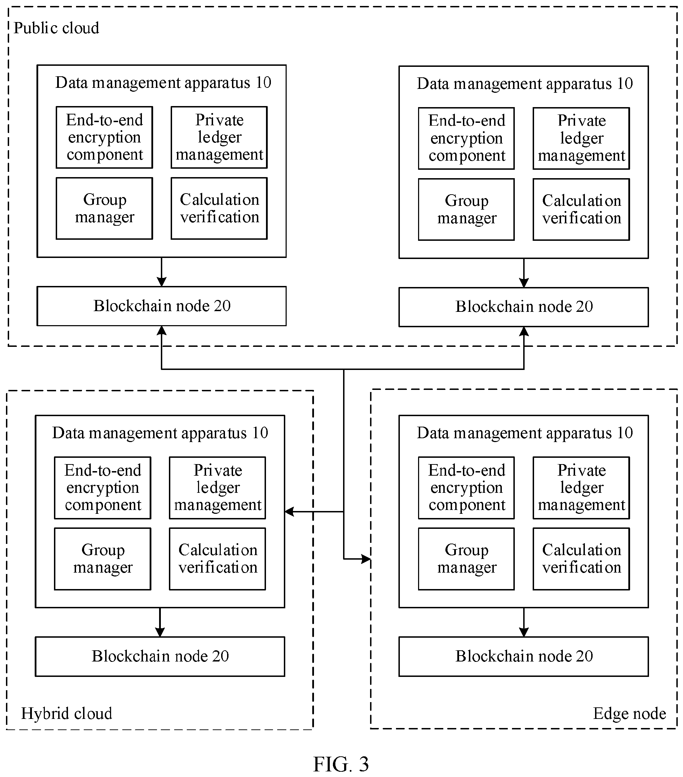

In some possible implementations, the distributed data management system 100 may alternatively be deployed in different environments in a distributed manner. Refer to a diagram of an architecture of a distributed data management system 100 shown in FIG. 3. A plurality of data management apparatuses 10 of the distributed data management system 100 may be separately deployed in a public cloud, a hybrid cloud, and an edge node, to provide a data management service for a multi-scenario consortium. For example, the following five organizations are involved in a commodity transaction on an e-commerce platform: a farmer, a shipper, a wholesaler, a distributor, and a retailer. Data management apparatuses 10 corresponding to the organizations may be deployed in a distributed manner in a hybrid environment including a public cloud, a private cloud, and an edge node. When the farmer sells commodities abroad, the commodity is transferred to a distributor abroad, the shipper transfers the commodity between parties, the wholesaler purchases the commodity from the distributor, and the retailer purchases the commodity from the shipper and the wholesaler. The distributor may expect to perform privacy transactions with the farmer and the shipper, to keep a transaction term confidential from the wholesaler and the retailer, so as to avoid exposure of a markup charged by the distributor. The distributor may also expect to establish a separate privacy transaction with the wholesaler because the distributer charges the wholesaler less than the retailer. Similarly, the wholesaler may also expect to establish privacy transactions with the retailer and a consignor.

Based on the distributed data management system 100 provided in embodiments of this application, embodiments of this application further provide a corresponding data processing method.

To make the technical solutions of this application clearer and easier to understand, the following describes the data processing method in embodiments of this application with reference to the accompanying drawings.

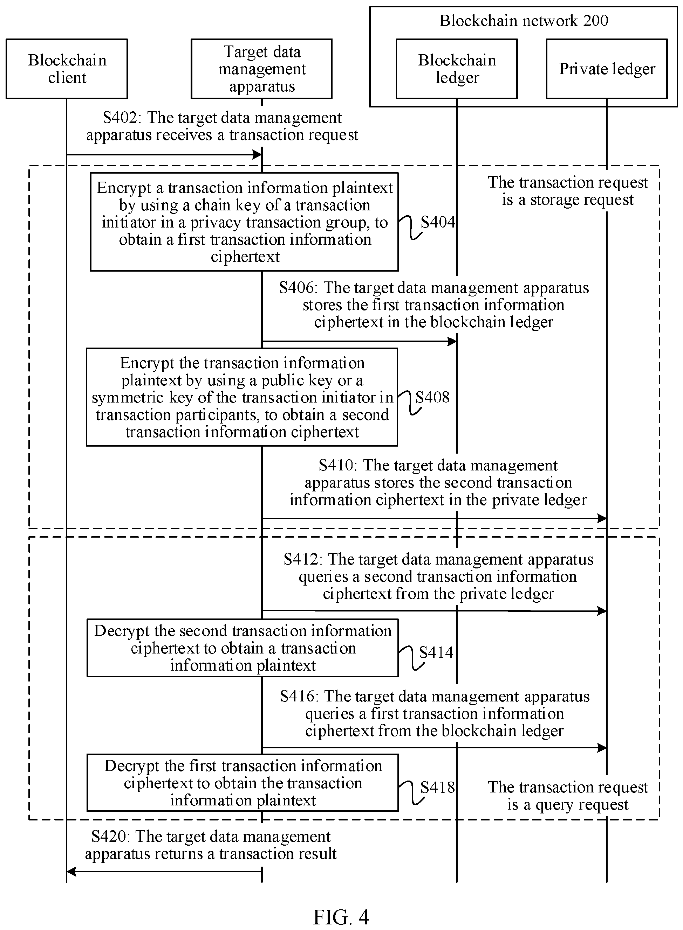

Refer to a flowchart of a data processing method shown in FIG. 4. The method includes the following steps.

S402: A target data management apparatus receives a transaction request sent by a blockchain client. When the transaction request is a storage request, S404 to S410 are performed. When the transaction request is a query request, S412 to S418 are performed.

The target data management apparatus may be any data management apparatus 10 of a distributed data management system 100, for example, may be the foregoing first data management apparatus or second data management apparatus.

The transaction request may be the storage request. The storage request is used to store data, for example, store the data in a blockchain network 200. The transaction request may alternatively be the query request. The query request is used to query data, for example, obtain the data from the blockchain network 200. The transaction request may include identifiers of transaction participants, to indicate that data is shared between the transaction participants and is kept confidential from a non-transaction participant (for example, a participant other than the transaction participant in the blockchain network). Based on this, when the transaction request is the storage request, the storage request is used to request to perform end-to-end encryption on data such as a transaction information plaintext and then perform chaining. When the transaction request is the query request, the transaction request is used to request to decrypt a transaction information ciphertext to obtain a transaction information plaintext and then return the transaction information plaintext.

The participant may be an organization in the blockchain network. Based on this, the identifier of the transaction participant may be one or more of an organization name or organization code. For example, when a user expects to initiate a privacy transaction between an organization A and an organization B, the transaction request may include organization names of the organization A and the organization B, to specify that the privacy transaction is performed between the organization A and the organization B. For another example, when the user expects to initiate a privacy transaction between the organization B and an organization C, the transaction request may include organization names of the organization B and the organization C, to specify that the privacy transaction is performed between the organization B and the organization C.

When the transaction request is the storage request, the transaction request may further carry the transaction information plaintext. The transaction information plaintext may be specifically data that needs to be shared.

S404: The target data management apparatus encrypts the transaction information plaintext by using a chain key of a transaction initiator in the transaction participants in a privacy transaction group, to obtain a first transaction information ciphertext.

For a participant in the blockchain network, the participant may be in one or more privacy transaction groups. The target data management apparatus may determine, based on the identifier of the transaction participant in the transaction request, a privacy transaction group corresponding to a current transaction. For example, when the transaction request includes the organization names of the organization A and the organization B, the target data management apparatus may determine that the privacy transaction group is a group including the organization A and the organization B, and is denoted as a group (organization A, organization B). A same organization may have different chain keys in different privacy transaction groups. The target data management apparatus may obtain, based on the privacy transaction group corresponding to the current transaction, the chain key of the transaction initiator in the transaction participants in the privacy transaction group, for example, a chain key of the organization A in the group (organization A, organization B), and then perform encryption by using the chain key, to obtain the first transaction information ciphertext.

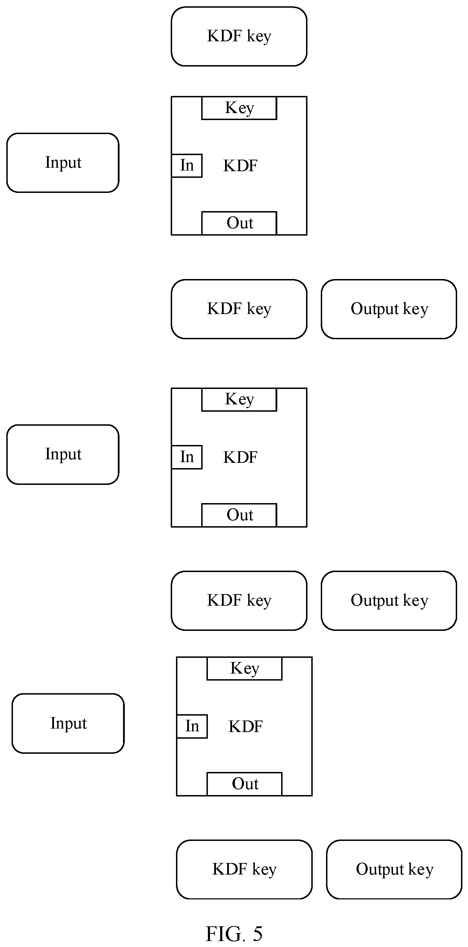

The chain key (chain key) is a KDF key of a key derivation function (Key derivation function, KDF) chain. The KDF chain is short for a KDF key chain. A KDF is defined as a cryptographic function: a secret and random KDF key (KDF key) and some other input data are input, and output data is returned. When the key is unknown, the output data is indistinguishable from a random number (in other words, the KDF meets a requirement of a pseudo random function (pseudo random function, PRF) in cryptography). If the key is not secret and random, a KDF output should still be able to be used as a secure cryptographic hash of the KDF key and the input data. The KDF chain includes output keys of a plurality of KDFs. A part of a KDF output is used as an output key (Output key), and another part replaces the KDF key and is used as an input key of another KDF. FIG. 5 shows a KDF chain that processes three input keys (KDF keys) and generates three output keys.

The target data management apparatus may encrypt transaction information based on the chain key and by using a double ratchet algorithm, to obtain the first transaction information ciphertext, and then include the first transaction information ciphertext in a message, to send the message to a data management apparatus 10 corresponding to a specified transaction participant.

Specifically, in a double ratchet session of the organization A and the organization B, KDF keys stored by the two parties are used for three chains: a root chain (root chain), a sending chain (sending chain), and a receiving chain (receiving chain) (a sending chain of one party corresponds to a receiving chain of the other party, and the reverse is also true).

When the organization A and the organization B exchange a message (the message may carry the first transaction information ciphertext), a new Diffie-Hellman public key is also exchanged, and a key output through Diffie-Hellman is used as an input of the root chain. A key output by the root chain is used as a KDF key of the sending chain and the receiving chain. This is referred to as a Diffie-Hellman ratchet (Diffie-Hellman ratchet). Each time a message is sent or received, the sending chain and the receiving chain move forward. Correspondingly, the output key is used to encrypt and decrypt the message. This is referred to as a symmetric-key ratchet (symmetric-key ratchet).

Each sent or received message (a message carrying the first transaction ciphertext) may be encrypted by using a unique message key (message key). The message key is an output key of the sending KDF chain and the receiving KDF chain. Because a KDF input of the sending KDF chain and the receiving KDF chain is a constant, the two chains cannot be recovered after being cracked. The sending chain and the receiving chain ensure that each message is encrypted by using a unique key, and the key may be deleted after encryption or decryption. A process of calculating a next chain key and a next message key from a given chain key is referred to as a ratchet step (ratchet step) of the symmetric-key ratchet (symmetric-key ratchet).

If an intermediate attacker steals a sending chain key and a receiving chain key of one party, the intermediate attacker can calculate all subsequent message keys and decrypt corresponding messages. To avoid this, the double ratchet algorithm combines the symmetric-key ratchet with the DH ratchet, and updates the chain key by using an output of the DH ratchet based on Diffie-Hellman.

To implement the DH ratchet, each communication party generates a DH key pair (a Diffie-Hellman public key and a Diffie-Hellman private key) as a current ratchet key pair (ratchet key pair). Each message sent by either party carries a message header including a current ratchet public key of the sender. When receiving a new ratchet public key sent by a remote end, a local end performs a DH ratchet step (DH ratchet step) to generate a new ratchet key pair to replace a current key pair of the local end.

The communication parties alternately update the ratchet key pair to form a "ping-pong" behavior pattern. An eavesdropper who intercepts only one of the parties may obtain a value of a current ratchet private key, but the ratchet private key is eventually replaced by a ratchet private key that is not leaked. At that time, Diffie-Hellman calculation between ratchet key pairs defines a new DH output unknown to the attacker.

It should be noted that the target data management apparatus may further perform signature by using a private key in a public-private key pair generated by using a CA node, so that a peer end can perform signature verification, to determine an identity of a local end. To ensure security, the CA node may derive a temporary public-private key pair, and the target data management apparatus may perform signature on the first transaction information ciphertext in the message by using a temporary private key and with reference to a signature algorithm. In addition, to improve chaining efficiency, the target data management apparatus may construct a key value (key value, KV) based on a group and a group message, and then chain the group message in a key value form.

S406: The target data management apparatus stores the first transaction information ciphertext in a blockchain ledger.

Specifically, the target data management apparatus may send the first transaction information ciphertext to a corresponding blockchain node 20, and the blockchain node 20 stores the first transaction information ciphertext in the blockchain ledger based on a smart contract of the blockchain network 200. The blockchain node 20 may reach a consensus based on a consensus algorithm defined by the smart contract, and after reaching the consensus, each blockchain node 20 stores, by adding a block, the first transaction information ciphertext in a blockchain ledger maintained by each blockchain node 20.

S408: The target data management apparatus encrypts the transaction information plaintext by using a public key or a symmetric key of the transaction initiator in the transaction participants, to obtain a second transaction information ciphertext.

When the target data management apparatus is further mounted with a local storage, the target data management apparatus may encrypt the transaction information plaintext by using the public key or the symmetric key of the transaction initiator and by using an encryption algorithm, to obtain the second transaction information ciphertext. When using the public key, the target data management apparatus may perform encryption by using an asymmetric encryption algorithm. When using the symmetric key, the target data management apparatus may perform encryption by using a symmetric encryption algorithm.

It should be noted that a data management apparatus 10 corresponding to another transaction participant in the privacy transaction group may encrypt the transaction information plaintext by using a public key or a symmetric key of the transaction participant and by using an encryption algorithm, to obtain a second transaction information ciphertext.

S410: The target data management apparatus stores the second transaction information ciphertext in a private ledger.

The target data management apparatus stores, in the private ledger in the local storage mounted to the target data management apparatus, the second transaction information ciphertext obtained through calculation by the target data management apparatus. The data management apparatus 10 corresponding to the another transaction participant in the privacy transaction group may store, in a private ledger in a local storage mounted to the data management apparatus 10, a second transaction information ciphertext obtained through calculation by the data management apparatus 10.

Second transaction information ciphertexts stored in different private ledgers may be obtained through encryption by using keys (public keys or symmetric keys) of transaction participants respectively corresponding to the different private ledgers. Therefore, the second transaction information ciphertexts stored in the different private ledgers may be different.

It should be noted that S404 to S410 are an implementation in which the target data management apparatus stores the transaction information ciphertext in the blockchain network 200 based on the storage request. In another possible implementation of this embodiment of this application, the transaction information ciphertext may alternatively be stored in another manner. For example, the target data management apparatus may not be mounted with the local storage, and correspondingly, the target data management apparatus may not perform S408 and S410.

S412: The target data management apparatus queries a second transaction information ciphertext from a private ledger. If query succeeds, S414 may be performed. If query fails, S416 and S418 may be performed.

When the target data management apparatus is mounted with a local storage, the target data management apparatus may preferentially query the second transaction information ciphertext from the private ledger in the local storage, to improve query efficiency and query performance. Considering that the second transaction information ciphertext in the private ledger in the local storage may be tampered with or deleted, or a storage medium in the local storage may be faulty, a query failure may be caused. Based on this, the target data management apparatus may perform S414 for decryption when the query succeeds, and perform S416 and S418 to obtain and decrypt a first transaction information ciphertext when the query fails.

S414: The target data management apparatus decrypts the second transaction information ciphertext to obtain a transaction information plaintext.

Specifically, when obtaining the second transaction information ciphertext by encrypting the transaction information plaintext by using a public key, the target data management apparatus may decrypt the second transaction information ciphertext by using a private key, to restore the transaction information plaintext. When obtaining the second transaction information ciphertext by encrypting the transaction information plaintext by using the symmetric key, the target data management apparatus may decrypt the second transaction information ciphertext by using the symmetric key, to restore the transaction information plaintext.

S416: The target data management apparatus queries the first transaction information ciphertext from a blockchain ledger.

The target data management apparatus may query the first transaction information ciphertext from the blockchain ledger based on a smart contract of the blockchain network 200. Due to a tamper-proof feature of a blockchain, the target data management apparatus may query the first transaction information ciphertext from a blockchain ledger maintained by each blockchain node 20.

S418: The target data management apparatus decrypts the first transaction information ciphertext to obtain the transaction information plaintext.

The first transaction information ciphertext is usually obtained through encryption based on a chain key by using a double ratchet algorithm. Based on this, the target data management apparatus may decrypt the first transaction information ciphertext with reference to the chain key by using the double ratchet algorithm, to obtain the transaction information plaintext.

It should be noted that S412 and S414 are optional steps in this embodiment of this application, and the steps may alternatively not be performed when the data processing method in this embodiment of this application is performed. For example, the target data management apparatus may directly query the first transaction information ciphertext from the blockchain ledger based on the query request, and then decrypt the first transaction information ciphertext to obtain the transaction information plaintext.

S404 to S418 are an implementation in which the target data management apparatus performs I/O on the transaction information ciphertext in the blockchain network 200 based on the transaction request in this embodiment of this application. The data processing method in this embodiment of this application may alternatively be implemented by performing another step.

S420: The target data management apparatus returns a transaction result to the blockchain client.

For different transaction requests, transaction results are different. For example, when the transaction request is the storage request, the transaction result may be a transaction success notification, to indicate a storage success. For another example, when the transaction request is the query request, the transaction result may further include a found transaction information plaintext. The transaction information plaintext may be obtained through decryption by the target data management apparatus on the transaction information ciphertext.

In some possible implementations, the target data management apparatus may further obtain, from the private ledger, first meta information of data stored in the private ledger, and obtain, from the blockchain ledger of the blockchain network, second meta information of the data stored in the private ledger. The first meta information is meta information of the data stored in the private ledger, for example, one or more of a creator, creation time, a size, and a hash value of the data. The second meta information is meta information that is of the data in the private ledger and that is stored on the chain, for example, one or more of a creator, creation time, a size, and a hash value of the data. The second meta information is meta information that is of the data and that is stored on the chain when the data is stored in the private ledger.

The target data management apparatus may perform fault check based on the first meta information and the second meta information, to obtain a fault check result. Specifically, the target data management apparatus may compare the first meta information with the second meta information. If the first meta information does not match the second meta information, it indicates that a fault occurs. For example, the data stored in the private ledger is tampered with or deleted, or a storage mounted to the target data management apparatus is faulty. The target management apparatus may write the fault check result into the blockchain network 200.

Further, when the fault check result indicates that the data stored in the private ledger is tampered with or deleted, or the storage mounted to the target data management apparatus is faulty, the target data management apparatus may further perform fault recovery based on the blockchain ledger. Specifically, the target data management apparatus may decrypt the first transaction information ciphertext in the blockchain ledger to obtain the transaction information plaintext, then encrypt the transaction information plaintext to obtain the second transaction information ciphertext, and store the second transaction information ciphertext in the private ledger, to perform fault recovery.

Based on the foregoing content descriptions, this embodiment of this application provides the data processing method. In the method, a method that integrates the blockchain and the end-to-end encryption is designed for a blockchain in a consortium blockchain scenario or an open consortium blockchain scenario in which user data is open to all participants on the chain, but some participants expect to define a privacy transaction or privacy information by specifying different participants. In the method, the distributed data management system 100 is introduced to support key management and privacy data storage of different participants, implement organization-level privacy protection, and improve convenience of chaining and querying user privacy data based on an embedded group management capability.

In addition, a corresponding privacy protection algorithm is proposed for problems such as forward security and backward security, key agreement is performed based on blockchain propagation, and security is improved based on the end-to-end encryption double ratchet algorithm. User operations and encryption information are recorded based on the blockchain ledger. Therefore, an entire process can be traced. In addition, a transaction information plaintext of a current organization is encrypted and stored in a local ledger. After the local private ledger is lost, data can be restored by parsing transactions one by one in the blockchain ledger, to ensure data consistency and reliability, and improve overall availability of the data.

To make the technical solutions of this application clearer and easier to understand, the following describes the method in embodiments of this application with reference to a specific scenario.

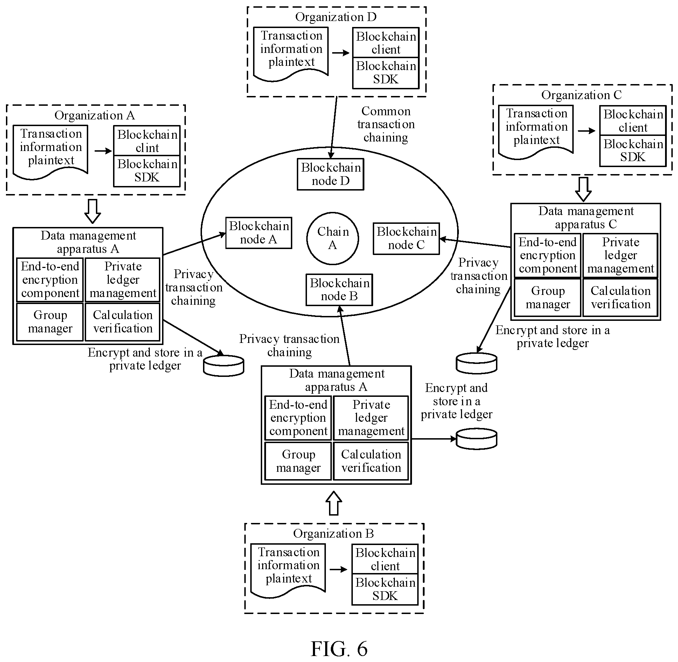

Refer to a schematic flowchart of a data processing method shown in FIG. 6. A blockchain network includes a blockchain node A corresponding to an organization A, a blockchain node B corresponding to an organization B, a blockchain node C corresponding to an organization C, and a blockchain node D corresponding to an organization D. The blockchain node A is bound to a data management apparatus A, the blockchain node B is bound to a data management apparatus B, the blockchain node C is bound to a data management apparatus C, and the blockchain node D is not bound to a data management apparatus. Therefore, the blockchain node A, the blockchain node B, and the blockchain node C have a privacy transaction capability, and the blockchain node D is a common blockchain node and does not have a privacy transaction capability.

During specific implementation, a data management apparatus bound to a blockchain node may create a privacy transaction group. For example, the data management apparatus A may create the following privacy transaction groups: a group (organization A, organization B), a group (organization A, organization C), a group (organization B, organization C), and a group (organization A, organization B, organization C). It should be noted that, as an organization in the blockchain network is scaled up or down, the data management apparatus may further dynamically update the privacy transaction group. For example, when the organization D joins the blockchain network, the data management apparatus may further create the following privacy transaction groups: a group (organization A, organization D), a group (organization A, organization B, organization D), a group (organization A, organization C, organization D), a group (organization B, organization C, organization D), a group (organization C, organization D), and a group (organization A, organization B, organization C, organization D).

A user sends a privacy protection transaction to a privacy protection engine side of a blockchain. The privacy protection engine records privacy transaction information in a local private ledger, and encryption information is recorded in each ledger of the blockchain node. FIG. 3 supports different types of deployment. A privacy protection transaction can only be initiated by an organization in which a privacy protection engine is deployed, and another node cannot support this function.

The data management apparatus A, the data management apparatus B, and the data management apparatus C may agree on a chain key based on the blockchain network, and synchronize the chain key in the group. When the organization A initiates a transaction, for example, the organization A sends, to the data management apparatus A by using a blockchain client, a transaction request used to store data, where the transaction request includes an identifier of the organization A and an identifier of the organization B, the data management apparatus A may encrypt a transaction information plaintext by using a chain key of the organization A in the group (organization A, organization B), to obtain a first transaction information ciphertext, and then store the first transaction information ciphertext on a chain. Further, the data management apparatus A may further encrypt the transaction information plaintext by using a public key or a symmetric key of the organization A, to obtain a second transaction information ciphertext, and then locally store the second transaction information ciphertext, specifically, store the second transaction information ciphertext in the private ledger.

The following describes in detail the method in embodiments of this application from each phase of data processing.

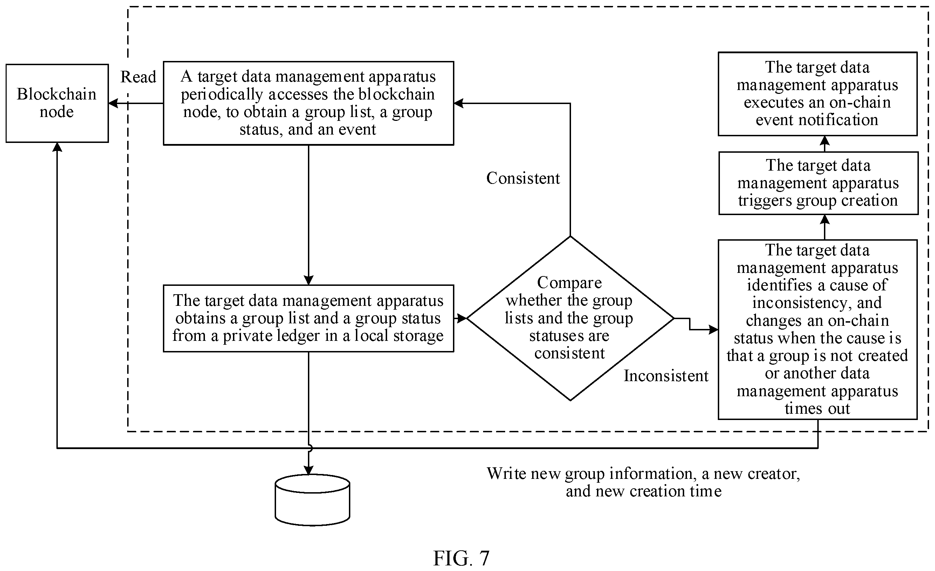

First, refer to a schematic flowchart of initialization of a distributed data management system shown in FIG. 7. The phase may include the following steps.

Step 1: A target data management apparatus in the distributed data management system periodically accesses a blockchain node, to obtain a group list, a group status, and an on-chain event notification.

Step 2: The target data management apparatus periodically accesses a private ledger in a local storage to obtain a group list and a group status.

Step 3: The target data management apparatus compares the group list and the group status that are obtained from the blockchain node with the group list and the group status that are obtained from the local ledger. If the group list and the group status that are obtained from the blockchain node are consistent with the group list and the group status that are obtained from the local ledger, step 1 and step 2 are performed. If the group list and the group status that are obtained from the blockchain node are inconsistent with the group list and the group status that are obtained from the local ledger, step 4 is performed.

Step 4: The target data management apparatus identifies a cause of inconsistency, and changes an on-chain status when the cause is that a group is not created or creation by another data management apparatus times out.

Step 5: The target data management apparatus triggers group creation.

Step 6: The target data management apparatus executes the on-chain event notification.

Specifically, when triggering the group creation, the target data management apparatus may generate the on-chain event notification, to notify another data management apparatus that the current target data management apparatus is responsible for creating a target group. The target data management apparatus may perform, based on the on-chain event notification, an operation of creating the target group.

In the phase, a data management system of the distributed data management system may interact with a blockchain network during startup, access the blockchain node to obtain information such as a group list, a group status, and a current organization-related event that are stored in a current chain, and load a group list and a group status in a private ledger in a local storage. The data management system calculates a group difference through comparison, completes initialization if an on-chain group is consistent with a local group, identifies a current cause of inconsistency if the on-chain group is inconsistent with the local group, to check whether group creation by another data management apparatus times out, preempt and update a creation task to the chain based on different causes, and trigger a group creation procedure. Then, step 1 and step 2 are performed to continue to check the group.

It should be noted that, in the foregoing group creation process, the group may alternatively be created based on a requirement during a privacy transaction, and a full privacy transaction group does not need to be created in an initialization phase.

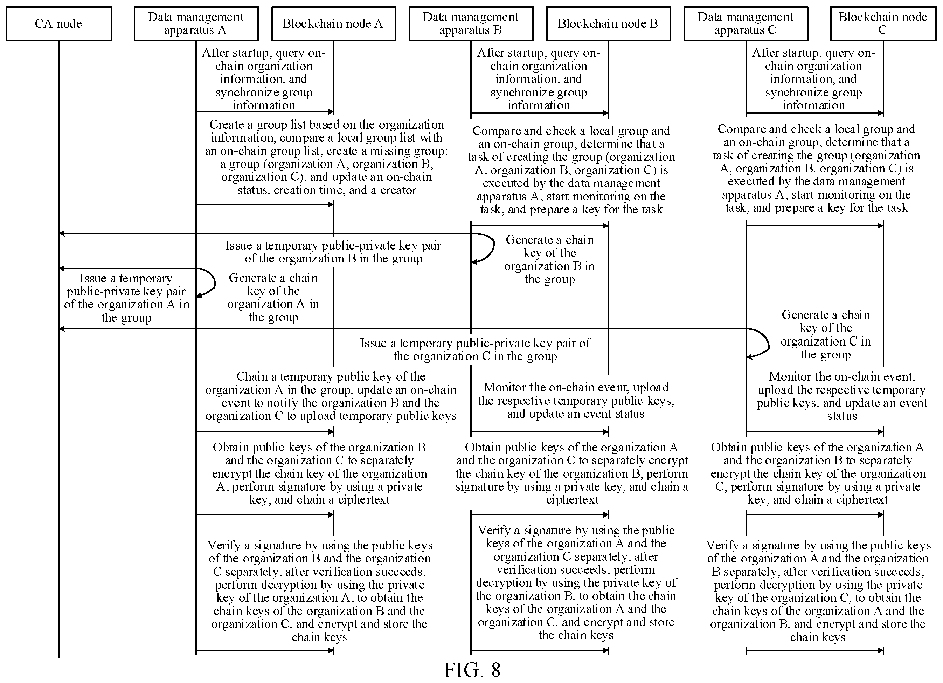

Then, refer to a schematic flowchart of group creation shown in FIG. 8. The phase may include the following steps.

Step 1: After startup, each data management apparatus of a distributed data management system queries on-chain organization information, and synchronizes group information.

Step 2: A data management apparatus A creates a group list based on the organization information, compares a local group list with an on-chain group list, creates a missing group: a group (organization A, organization B, organization C), and updates an on-chain status, creation time, and a creator.

Step 3: A data management apparatus B and a data management apparatus C compare and check a local group and an on-chain group, determine that a task of creating the group (organization A, organization B, organization C) is executed by the data management apparatus A, start monitoring on the task, and prepare a key for the task.

Step 4: A CA node separately issues temporary public-private key pairs used by the data management apparatus A, the data management apparatus B, and the data management apparatus C in the group (organization A, organization B, organization C). The data management apparatus A, the data management apparatus B, and the data management apparatus C respectively generate chain keys in the group (organization A, organization B, organization C).

Step 5: The data management apparatus A chains a temporary public key of the data management apparatus A, and updates an on-chain event to notify the organization B and the organization C to upload temporary public keys of the organization B and the organization C.

Step 6: The data management apparatus B and the data management apparatus C monitor the on-chain event, upload the respective temporary public keys, and update an event status.

Step 7: The data management apparatus A, the data management apparatus B, and the data management apparatus C encrypt the respective chain keys by using public keys of other specified transaction participants separately, perform signature by using private keys, and then chain ciphertexts of the chain keys.

Step 8: The data management apparatus A, the data management apparatus B, and the data management apparatus C verify signatures by using the public keys of the other specified transaction participants separately, and after verification succeeds, perform decryption by using the respective private keys, to obtain the chain keys of the other specified transaction participants, and then encrypt and store the chain keys.

FIG. 8 is described by using an example of creating the group (organization A, organization B, organization C) and synchronizing the chain key. When the missing privacy transaction group is another group, the group may also be created in a similar manner, and a chain key is synchronized in the group.

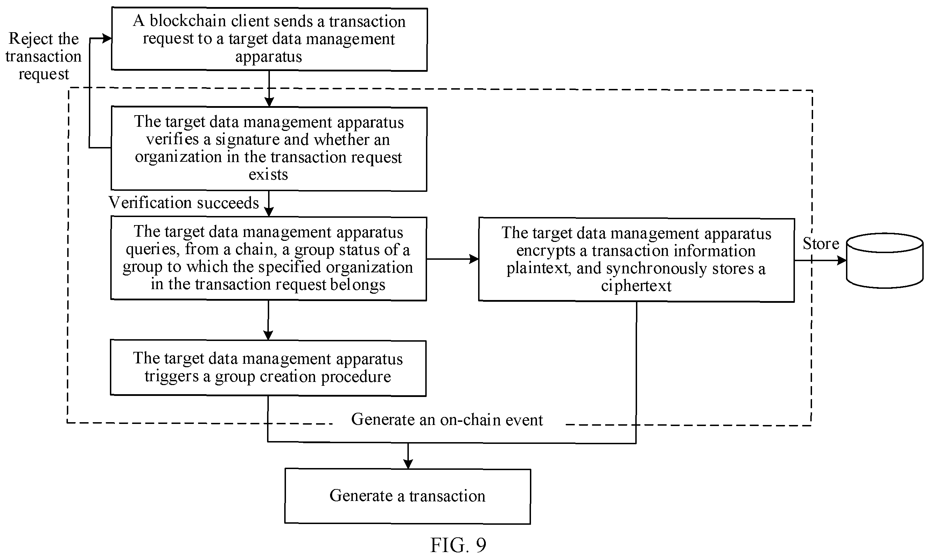

Then, refer to a schematic flowchart of privacy transaction initiation shown in FIG. 9. The phase includes the following steps.

Step 1: A blockchain client sends a transaction request to a target data management apparatus.

The transaction request includes identifiers of an organization A, an organization B, and an organization C, for example, organization names of the organization A, the organization B, and the organization C.

Step 2: The target data management apparatus verifies a signature carried in the transaction request and whether an organization specified in the transaction request exists. If verification succeeds, step 3 is performed. If verification fails, the transaction request is rejected.

A transaction initiated from the blockchain client includes a range of a specified group and transaction content. The data management apparatus first checks a signature of the transaction. If the request is an invalid request, the data management apparatus directly returns the request. If the request is a valid request, the data management apparatus checks whether an organization of a privacy transaction of the request exists, and if the organization does not exist, the data management apparatus returns the request.

Step 3: The target data management apparatus queries, from a chain, a group status of a group to which the specified organization in the transaction request belongs. If the group status is normal, steps 4 and step 5 are performed to perform privacy transaction synchronization. If the group status is that the group does not exist, a key of the group is being changed, or the group is being created, group creation or processing is triggered.

If the group does not exist, is in a key change process, or is being created, the transaction request is returned to the blockchain client, so that the blockchain client waits for completion of group creation, and initiates a group creation procedure.

Step 4: The target data management apparatus encrypts and chain a transaction information plaintext.

Step 5: The target data management apparatus encrypts the transaction information plaintext and stores the transaction information plaintext in a private ledger.

Step 6: The target data management apparatus counts a quantity of privacy transactions. When the quantity of privacy transactions reaches a preset quantity, step 7 is performed.

The preset quantity may be set based on an empirical value. For example, the preset quantity may be set to 10.

Step 7: The target data management apparatus triggers a key update.

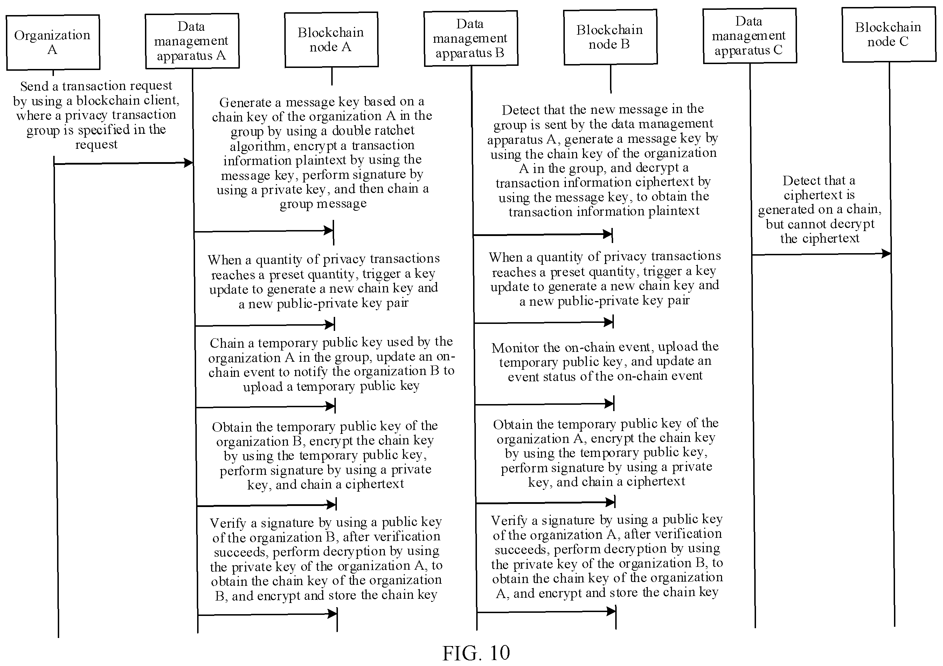

For a detailed procedure of privacy transaction synchronization, refer to FIG. 10. In FIG. 10, an example in which a privacy transaction is performed between an organization A and an organization B is used for description. The following steps are specifically included.

Step 1: The organization A sends a transaction request to a data management apparatus A by using a blockchain client.

Step 2: The data management apparatus A may generate a message key based on a chain key of the organization A in a group by using a double ratchet algorithm, encrypt a transaction information plaintext by using the message key, perform signature by using a private key, and then chain a group message.

Step 3: A data management apparatus B detects that the new message in the group is sent by the data management apparatus A, generates a message key by using the chain key of the organization Ain the group, and decrypts a transaction information ciphertext by using the message key, to obtain the transaction information plaintext.

Step 4: A data management apparatus C detects that a ciphertext is generated on a chain, but cannot decrypt the ciphertext.

Step 5: When a quantity of privacy transactions between the data management apparatus A and the data management apparatus B reaches a preset quantity, trigger a key update to generate a new chain key and a new public-private key pair.

Step 6: The data management apparatus A chains a new temporary public key used by the data management apparatus A in the group, and updates an on-chain event to notify another organization in the group to upload a new public key.

Step 7: The data management apparatus B monitors the on-chain event, chains a new temporary public key used by the data management apparatus B in the group, and updates the on-chain event.

Step 8: The data management apparatus A obtains the new temporary public key used by the organization B in the group, encrypts the chain key by using the temporary public key, perform signature by using a private key, and then chains a ciphertext.

Step 9: The data management apparatus B obtains the new temporary public key used by the organization A in the group, encrypts the chain key by using the temporary public key, perform signature by using a private key, and then chains a ciphertext.

Step 10: The data management apparatus A and the data management apparatus B verify signatures by using a public key of a peer end, and after verification succeeds, the data management apparatus A and the data management apparatus B perform decryption by using the private keys of the data management apparatus A and the data management apparatus B, to obtain a chain key of a peer end in the group.

In this embodiment, the data management apparatus may transfer privacy data based on a blockchain, and periodically update a group key by using the end-to-end encryption double ratchet algorithm, to implement a forward security capability of a group transaction. The data management apparatus may further update a key of the privacy transaction based on a quantity of key update rotation times specified in a configuration. For example, a minimum quantity of key update rotation times may be specified as one, to achieve an effect of one key for one time. If the quantity of key update rotation times is reached, a group member generates a temporary public key, a temporary private key, and a new chain key, and then the temporary public key, the temporary private key, and the new chain key are synchronously known to another member in the group based on an agreement process in the previous procedure.

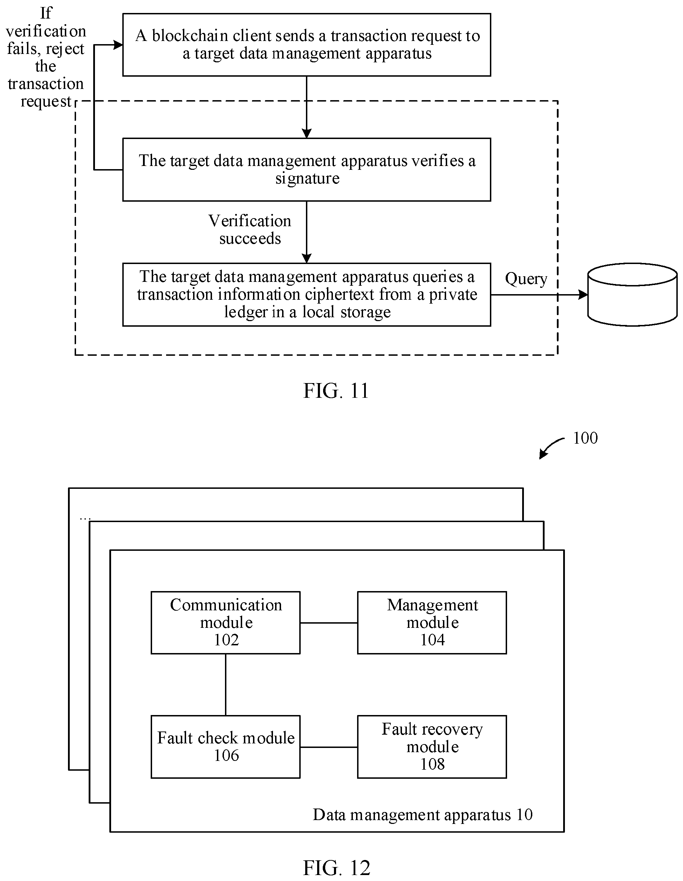

Then, refer to a schematic flowchart of privacy transaction query shown in FIG. 11. The phase includes the following steps.

Step 1: A blockchain client sends a transaction request to a target data management apparatus.

Step 2: The target data management apparatus verifies a signature in the transaction request. If verification succeeds, step 3 is performed. If verification fails, the transaction request is rejected.

Step 3: The target data management apparatus queries a transaction information ciphertext from a private ledger in a local storage.

In this embodiment, the data management apparatus supports a privacy transaction query capability by using the blockchain client. Because the data management apparatus may host all temporary keys, and the keys are used for transaction encryption and are invisible to a user, a transaction may be queried based on the data management apparatus. After the user initiates privacy transaction query, the data management apparatus may verify the signature of the transaction request to verify whether the transaction request is a valid request. If the transaction request is invalid, the data management apparatus directly returns the transaction request. If the transaction request is valid, the data management apparatus queries a result from the private ledger in the local storage and returns the result to a client. In addition, to ensure that the transaction is not tampered with, the target data management apparatus may compare a hash on a chain with a hash in the private ledger. If the transaction information ciphertext does not exist in the private ledger, the transaction information ciphertext may be obtained from a blockchain ledger on the chain.

Based on the data processing method provided in embodiments of this application, an embodiment of this application further provides the foregoing distributed data management system 100. The following describes the distributed data management system 100 with reference to the accompanying drawings.

Refer to a diagram of a structure of a distributed data management system 100 shown in FIG. 12. The distributed data management system 100 includes a plurality of data management apparatuses 10. A first data management apparatus in the plurality of data management apparatuses 10 corresponds to a first blockchain node in a blockchain network, and a second data management apparatus in the plurality of data management apparatuses 10 corresponds to a second blockchain node in the blockchain network.

A target data management apparatus in the plurality of data management apparatuses 10 is configured to receive a transaction request from a blockchain client. The transaction request includes identifiers of transaction participants.

The target data management apparatus is further configured to: perform input/output I/O on a transaction information ciphertext in the blockchain network based on the transaction request, where the transaction information ciphertext is obtained by encrypting a transaction information plaintext by using a key that is invisible to a participant other than the transaction participant, and return a transaction result to the blockchain client.

In some possible implementations, the blockchain node in the blockchain network includes a blockchain ledger.

The target data management apparatus is specifically configured to:
perform I/O on the transaction information ciphertext in the blockchain ledger based on the transaction request.

In some possible implementations, the target data management apparatus is mounted with a local storage, and the local storage includes a private ledger of the blockchain network.

The target data management apparatus is specifically configured to:
perform I/O on the transaction information ciphertext in the private ledger based on the transaction request.

In some possible implementations, the transaction request is a storage request, and the transaction request includes the transaction information plaintext.

The target data management apparatus is specifically configured to:
encrypt the transaction information plaintext by using a chain key of a transaction initiator in the transaction participants in a privacy transaction group, to obtain a first transaction information ciphertext, and store the first transaction information ciphertext in a blockchain ledger; and
encrypt the transaction information plaintext by using a public key or a symmetric key of the transaction initiator in the transaction participants, to obtain a second transaction information ciphertext, and store the second transaction information ciphertext in the private ledger.

In some possible implementations, the transaction request is a query request.

The target data management apparatus is specifically configured to:
read the transaction information ciphertext from the private ledger or a blockchain ledger based on the transaction request.

The method further includes:
The target data management apparatus decrypts the transaction information ciphertext to obtain the transaction information plaintext.

The transaction result includes the transaction information plaintext.

In some possible implementations, the target data management apparatus is further configured to:
before performing input/output I/O on the transaction information ciphertext in the blockchain network based on the transaction request, obtain, through agreement via the blockchain network, the chain key of the transaction initiator in the transaction participants in the privacy transaction group.

The key that is invisible to the participant other than the transaction participant includes the chain key.

In some possible implementations, the target data management apparatus is further configured to:
when a key update condition is triggered, update the chain key by using a double ratchet algorithm.

In some possible implementations, the key update condition includes:
A quantity of transactions based on the chain key reaches a preset quantity.

In some possible implementations, the target data management apparatus is further configured to:
before performing input/output I/O on the transaction information ciphertext in the blockchain network based on the transaction request, receive a public-private key pair issued by a certificate authority node to the transaction initiator in the transaction participants.

The key that is invisible to the participant other than the transaction participant includes a public key in the public-private key pair.

In some possible implementations, the target data management apparatus is mounted with the local storage, and the local storage includes the private ledger of the blockchain network.

The target data management apparatus is further configured to:
obtain, from the private ledger, first meta information of data stored in the private ledger, and obtain, from the blockchain ledger of the blockchain network, second meta information of the data stored in the private ledger; and
perform fault check based on the first meta information and the second meta information, to obtain a fault check result.

In some possible implementations, the target data management apparatus is further configured to:
when the fault check result indicates that the data stored in the private ledger is tampered with or deleted, or a storage mounted to the target data management apparatus is faulty, perform fault recovery based on the blockchain ledger.

The target data management apparatus may be any one of the plurality of data management apparatuses 10, for example, may be the first data management apparatus or the second data management apparatus. The following describes a structure of the data management apparatus. As shown in FIG. 12, a data management apparatus 10 includes:
a communication module 102, configured to receive a transaction request from a blockchain client, where the transaction request includes identifiers of transaction participants; and
a management module 104, configured to perform input/output I/O on a transaction information ciphertext in a blockchain network based on the transaction request, where the transaction information ciphertext is obtained by encrypting a transaction information plaintext by using a key that is invisible to a participant other than the transaction participant.

The communication module 102 is further configured to return a transaction result to the blockchain client.

It should be noted that the management module 104 is configured to: implement a function of the group manager, the end-to-end encryption component, the private ledger management, or the calculation verification shown in FIG. 1, FIG. 2, or FIG. 3.

The communication module 102 and the management module 104 may be implemented by using a hardware module or by using a software module.

When implemented by using software, the communication module 102 and the management module 104 may be application programs or application program modules running on a computing device or a computing device cluster.

When implemented by using hardware, the communication module 102 may be implemented by using a transceiver module such as a network interface card or a transceiver. The management module 104 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

In some possible implementations, a blockchain node in the blockchain network includes a blockchain ledger.

The management module 104 is specifically configured to:
perform I/O on the transaction information ciphertext in the blockchain ledger based on the transaction request.

In some possible implementations, the data management apparatus is mounted with a local storage, and the local storage includes a private ledger of the blockchain network.

The management module 104 is specifically configured to:
perform I/O on the transaction information ciphertext in the private ledger based on the transaction request.

In some possible implementations, the transaction request is a storage request, and the transaction request includes the transaction information plaintext.

The management module 104 is specifically configured to:
encrypt the transaction information plaintext by using a chain key of a transaction initiator in the transaction participants in a privacy transaction group, to obtain a first transaction information ciphertext, and store the first transaction information ciphertext in a blockchain ledger; and
encrypt the transaction information plaintext by using a public key or a symmetric key of the transaction initiator in the transaction participants, to obtain a second transaction information ciphertext, and store the second transaction information ciphertext in the private ledger.

In some possible implementations, the transaction request is a query request.

The management module 104 is specifically configured to:
read the transaction information ciphertext from the private ledger or a blockchain ledger based on the transaction request.

The management module 104 is further configured to:
decrypt the transaction information ciphertext to obtain the transaction information plaintext.

The transaction result includes the transaction information plaintext.

In some possible implementations, the management module 104 is further configured to:
before performing input/output I/O on the transaction information ciphertext in the blockchain network based on the transaction request, obtain, through agreement via the blockchain network, the chain key of the transaction initiator in the transaction participants in the privacy transaction group.

The key that is invisible to the participant other than the transaction participant includes the chain key.

In some possible implementations, the management module 104 is further configured to:
when a key update condition is triggered, update the chain key by using a double ratchet algorithm.

In some possible implementations, the key update condition includes:
A quantity of transactions based on the chain key reaches a preset quantity.

In some possible implementations, the communication module 102 is further configured to:
receive a public-private key pair issued by a certificate authority node to the transaction initiator in the transaction participants.

The key that is invisible to the participant other than the transaction participant includes a public key in the public-private key pair.

In some possible implementations, the data management apparatus 10 is mounted with the local storage, and the local storage includes the private ledger of the blockchain network.

The communication module 102 is further configured to:
obtain, from the private ledger, first meta information of data stored in the private ledger, and obtain, from the blockchain ledger of the blockchain network, second meta information of the data stored in the private ledger.

The apparatus 10 further includes:
a fault check module 106, configured to perform fault check based on the first meta information and the second meta information, to obtain a fault check result.

The fault check module 106 may be implemented by using a hardware module or a software module.

When implemented by using software, the fault check module 106 may be an application program or an application program module running on a computing device or a computing device cluster.

When implemented by using hardware, the fault check module 106 may be a device implemented by using an application-specific integrated circuit ASIC or a programmable logic device PLD, or the like. The PLD may be implemented by a complex programmable logic device CPLD, a field programmable gate array FPGA, generic array logic GAL, or any combination thereof.

In some possible implementations, the apparatus 10 further includes:
a fault recovery module 108, configured to: when the fault check result indicates that the data stored in the private ledger is tampered with or deleted, or a storage mounted to the data management apparatus is faulty, perform fault recovery based on the blockchain ledger. Similarly, the fault recovery module 108 may be implemented by using a hardware module or a software module.

When implemented by using software, the fault recovery module 108 may be an application program or an application program module running on a computing device or a computing device cluster.

When implemented by using hardware, the fault recovery module 108 may be a device implemented by using an application-specific integrated circuit ASIC or a programmable logic device PLD, or the like. The PLD may be implemented by a complex programmable logic device CPLD, a field programmable gate array FPGA, generic array logic GAL, or any combination thereof.

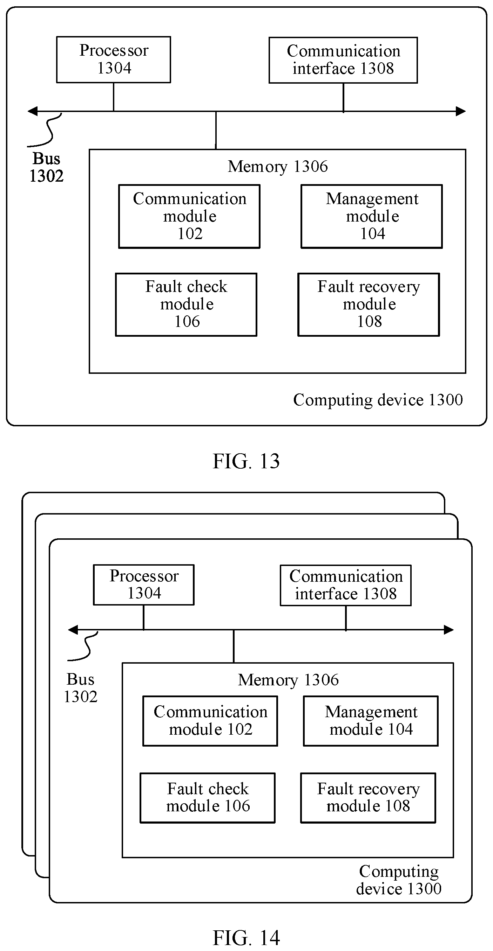

This application further provides a computing device 1300. As shown in FIG. 13, the computing device 1300 includes a bus 1302, a processor 1304, a memory 1306, and a communication interface 1308. The processor 1304, the memory 1306, and the communication interface 1308 communicate with each other through the bus 1302. The computing device 1300 may be a computing device in a central cloud, for example, a central server, or a computing device in an edge cloud, for example, an edge server. The computing device 1300 may alternatively be a lightweight device, for example, a terminal device such as a smartphone or a smart wearable device. It should be understood that quantities of processors and memories in the computing device 1300 are not limited in this application.

The bus 1302 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used in FIG. 13 for representation, but it does not indicate that there is only one bus or only one type of bus. The bus 1302 may include a path for transmitting information between components (for example, the memory 1306, the processor 1304, and the communication interface 1308) of the computing device 1300.

The processor 1304 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 1306 may include a volatile memory (volatile memory), for example, a random access memory (random access memory, RAM). The processor 1304 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1306 stores executable program code, and the processor 1304 executes the executable program code to implement the foregoing data processing method. Specifically, the memory 1306 stores instructions used by the distributed data management system 100 or the data management apparatus 10 to perform the data processing method.

The communication interface 1308 implements communication between the computing device 1300 and another device or a communication network by using a transceiver module, for example, but not limited to a network interface card or a transceiver.

An embodiment of this application further provides a computing device cluster. The computing device cluster includes at least one computing device 1300. The computing device 1300 may be a server, for example, a central server or an edge server. In some embodiments, the computing device 1300 may alternatively be a terminal device.

As shown in FIG. 14, the computing device cluster includes at least one computing device 1300. A memory 1306 in one or more computing devices 1300 in the computing device cluster may store same instructions used by a distributed data management system 100 to perform a data processing method.

In some possible implementations, the one or more computing devices 1300 in the computing device cluster may alternatively be configured to execute some instructions used by the distributed data management system 100 to perform the data processing method. In other words, a combination of the one or more computing devices 1300 may jointly execute the instructions used by the distributed data management system 100 to perform the data processing method.

It should be noted that memories 1306 in different computing devices 1300 in the computing device cluster may store different instructions, to perform some functions of the distributed data management system 100.

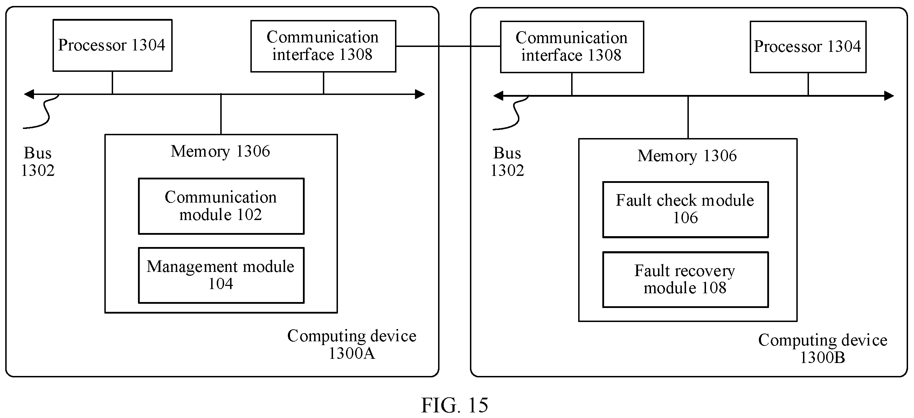

FIG. 15 shows a possible implementation. As shown in FIG. 15, two computing devices 1300A and 1300B are connected through a communication interface 1308. A memory in the computing device 1300A stores instructions for performing functions of a communication module 102 and a management module 104. A memory in the computing device 1300B stores instructions for performing functions of a fault check module 106 and a fault recovery module 108. In other words, memories 1306 in the computing device 1300A and the computing device 1300B jointly store instructions used by a distributed data management system 100 to perform a data processing method.

In a connection manner between computing device clusters shown in FIG. 15, it may be considered that in the data processing method provided in this application, a distributed ledger maintained by a blockchain node in a blockchain network needs to be scanned during fault check, and fault information stored in the blockchain node needs to be read during fault recovery. Therefore, it is considered that functions implemented by the communication module 102 and the management module 104 are performed by the computing device 1300A, and functions implemented by the fault check module 106 and the fault recovery module 108 are performed by the computing device 1300B.

It should be understood that functions of the computing device 1300A shown in FIG. 15 may alternatively be implemented by a plurality of computing devices 1300. Similarly, functions of the computing device 1300B may alternatively be implemented by the plurality of computing devices 1300.

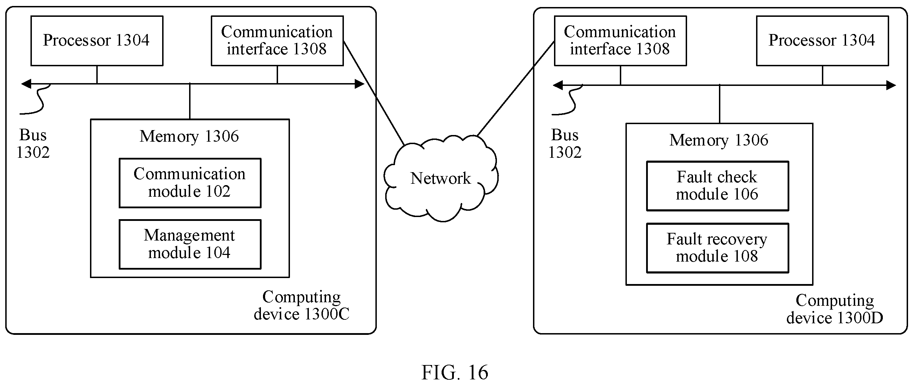

In some possible implementations, one or more computing devices in the computing device cluster may be connected through a network. The network may be a wide area network, a local area network, or the like. FIG. 16 shows a possible implementation. As shown in FIG. 16, two computing devices 1300C and 1300D are connected through a network. Specifically, each computing device is connected to the network through a communication interface of the computing device. In this possible implementation, a memory 1306 in the computing device 1300C stores instructions for performing functions of a communication module 102 and a management module 104. In addition, a memory 1306 in the computing device 1300D stores instructions for performing functions of a fault check module 106 and a fault recovery module 108.

In a connection manner between computing device clusters shown in FIG. 16, it may be considered that in the data processing method provided in this application, a distributed ledger maintained by a blockchain node in a blockchain network needs to be scanned, or fault information stored in the blockchain node needs to be read. Therefore, it is considered that the functions implemented by the communication module 102 and the management module 104 are performed by the computing device 1300C, and the functions implemented by the fault check module 106 and the fault recovery module 108 are performed by the computing device 1300D. It should be understood that functions of the computing device 1300C shown in FIG. 16 may alternatively be implemented by a plurality of computing devices 1300. Similarly, functions of the computing device 1300D may alternatively be implemented by the plurality of computing devices 1300.

An embodiment of this application further provides a computer-readable storage medium. The computer-readable storage medium may be any usable medium that can be stored by a computing device, or a data storage device such as a data center that includes one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the data processing method applied to the distributed data management system 100.

An embodiment of this application further provides a computer program product including instructions. The computer program product may be software or a program product that includes instructions and that can run on a computing device or a computing device cluster or be stored in any usable medium. When the computer program product runs on at least one computing device (the computing device or the computing device cluster), the at least one computing device is enabled to perform the data processing method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A data processing method, applied to a distributed data management system, wherein the distributed data management system comprises a plurality of data management apparatuses, a first data management apparatus in the plurality of data management apparatuses corresponds to a first blockchain node in a blockchain network, a second data management apparatus in the plurality of data management apparatuses corresponds to a second blockchain node in the blockchain network, and the method comprises:
receiving, by a target data management apparatus in the plurality of data management apparatuses, a transaction request from a blockchain client, wherein the transaction request comprises identifiers of transaction participants;
performing input/output I/O, by the target data management apparatus, on a transaction information ciphertext in the blockchain network based on the transaction request, wherein the transaction information ciphertext is obtained by encrypting a transaction information plaintext by using a key that is invisible to a participant other than the transaction participant; and
returning, by the target data management apparatus, a transaction result to the blockchain client.

2. The method according to claim 1, wherein a blockchain node in the blockchain network comprises a blockchain ledger; and
the performing input/output I/O, by the target data management apparatus, on a transaction information ciphertext in the blockchain network based on the transaction request comprises:
performing I/O, by the target data management apparatus, on the transaction information ciphertext in the blockchain ledger based on the transaction request.

3. The method according to claim 1, wherein the target data management apparatus is mounted with a local storage, and the local storage comprises a private ledger of the blockchain network; and
the performing input/output I/O, by the target data management apparatus, on a transaction information ciphertext in the blockchain network based on the transaction request comprises:
performing I/O, by the target data management apparatus, on the transaction information ciphertext in the private ledger based on the transaction request.

4. The method according to claim 3, wherein the transaction request is a storage request, and the transaction request comprises the transaction information plaintext; and
the performing input/output I/O, by the target data management apparatus, on a transaction information ciphertext in the blockchain network based on the transaction request comprises:
encrypting, by the target data management apparatus, the transaction information plaintext by using a chain key of a transaction initiator in the transaction participants in a privacy transaction group, to obtain a first transaction information ciphertext, and storing the first transaction information ciphertext in a blockchain ledger; and
encrypting, by the target data management apparatus, the transaction information plaintext by using a public key or a symmetric key of the transaction initiator in the transaction participants, to obtain a second transaction information ciphertext, and storing the second transaction information ciphertext in the private ledger.

5. The method according to claim 3, wherein the transaction request is a query request;
the performing input/output I/O, by the target data management apparatus, on a transaction information ciphertext in the blockchain network based on the transaction request comprises:
reading, by the target data management apparatus, the transaction information ciphertext from the private ledger or a blockchain ledger based on the transaction request; and
the method further comprises:
decrypting, by the target data management apparatus, the transaction information ciphertext to obtain the transaction information plaintext, wherein
the transaction result comprises the transaction information plaintext.

6. The method according to any one of claims 1 to 5, wherein before the performing input/output I/O, by the target data management apparatus, on a transaction information ciphertext in the blockchain network based on the transaction request, the method further comprises:
obtaining, through agreement via the blockchain network, the chain key of the transaction initiator in the transaction participants in the privacy transaction group, wherein
the key that is invisible to the participant other than the transaction participant comprises the chain key.

7. The method according to claim 6, wherein the method further comprises:
when a key update condition is triggered, updating the chain key by using a double ratchet algorithm.

8. The method according to claim 7, wherein the key update condition comprises:
a quantity of transactions based on the chain key reaches a preset quantity.

9. The method according to any one of claims 1 to 5, wherein before the performing input/output I/O, by the target data management apparatus, on a transaction information ciphertext in the blockchain network based on the transaction request, the method further comprises:
receiving a public-private key pair issued by a certificate authority node to the transaction initiator in the transaction participants, wherein
the key that is invisible to the participant other than the transaction participant comprises a public key in the public-private key pair.

10. The method according to any one of claims 1 to 9, wherein the target data management apparatus is mounted with the local storage, and the local storage comprises the private ledger of the blockchain network; and
the method further comprises:
obtaining, by the target data management apparatus from the private ledger, first meta information of data stored in the private ledger, and obtaining, from the blockchain ledger of the blockchain network, second meta information of the data stored in the private ledger; and
performing fault check based on the first meta information and the second meta information, to obtain a fault check result.

11. The method according to claim 10, wherein the method further comprises:
when the fault check result indicates that the data stored in the private ledger is tampered with or deleted, or a storage mounted to the target data management apparatus is faulty, performing, by the target data management apparatus, fault recovery based on the blockchain ledger.

12. A distributed data management system, wherein the distributed data management system comprises a plurality of data management apparatuses, a first data management apparatus in the plurality of data management apparatuses corresponds to a first blockchain node in a blockchain network, and a second data management apparatus in the plurality of data management apparatuses corresponds to a second blockchain node in the blockchain network;
a target data management apparatus in the plurality of data management apparatuses is configured to receive a transaction request from a blockchain client, wherein the transaction request comprises identifiers of transaction participants; and
the target data management apparatus is further configured to: perform input/output I/O on a transaction information ciphertext in the blockchain network based on the transaction request, wherein the transaction information ciphertext is obtained by encrypting a transaction information plaintext by using a key that is invisible to a participant other than the transaction participant; and return a transaction result to the blockchain client.

13. The system according to claim 12, wherein a blockchain node in the blockchain network comprises a blockchain ledger; and
the target data management apparatus is specifically configured to:
perform I/O on the transaction information ciphertext in the blockchain ledger based on the transaction request.

14. The system according to claim 12, wherein the target data management apparatus is mounted with a local storage, and the local storage comprises a private ledger of the blockchain network; and
the target data management apparatus is specifically configured to:
perform I/O on the transaction information ciphertext in the private ledger based on the transaction request.

15. The system according to claim 14, wherein the transaction request is a storage request, and the transaction request comprises the transaction information plaintext; and
the target data management apparatus is specifically configured to:
encrypt the transaction information plaintext by using a chain key of a transaction initiator in the transaction participants in a privacy transaction group, to obtain a first transaction information ciphertext, and store the first transaction information ciphertext in a blockchain ledger; and
encrypt the transaction information plaintext by using a public key or a symmetric key of the transaction initiator in the transaction participants, to obtain a second transaction information ciphertext, and store the second transaction information ciphertext in the private ledger.

16. The system according to claim 14, wherein the transaction request is a query request;
the target data management apparatus is specifically configured to:
read the transaction information ciphertext from the private ledger or a blockchain ledger based on the transaction request; and
the method further comprises:
decrypting, by the target data management apparatus, the transaction information ciphertext to obtain the transaction information plaintext, wherein
the transaction result comprises the transaction information plaintext.

17. The system according to any one of claims 11 to 16, wherein the target data management apparatus is further configured to:
before performing input/output I/O on the transaction information ciphertext in the blockchain network based on the transaction request, obtain, through agreement via the blockchain network, the chain key of the transaction initiator in the transaction participants in the privacy transaction group, wherein
the key that is invisible to the participant other than the transaction participant comprises the chain key.

18. The system according to claim 17, wherein the target data management apparatus is further configured to:
when a key update condition is triggered, update the chain key by using a double ratchet algorithm.

19. The system according to claim 18, wherein the key update condition comprises:
a quantity of transactions based on the chain key reaches a preset quantity.

20. The system according to any one of claims 11 to 16, wherein the target data management apparatus is further configured to:
before performing input/output I/O on the transaction information ciphertext in the blockchain network based on the transaction request, receive a public-private key pair issued by a certificate authority node to the transaction initiator in the transaction participants, wherein
the key that is invisible to the participant other than the transaction participant comprises a public key in the public-private key pair.

21. The system according to any one of claims 11 to 20, wherein the target data management apparatus is mounted with the local storage, and the local storage comprises the private ledger of the blockchain network; and
the target data management apparatus is further configured to:
obtain, from the private ledger, first meta information of data stored in the private ledger, and obtain, from the blockchain ledger of the blockchain network, second meta information of the data stored in the private ledger; and
perform fault check based on the first meta information and the second meta information, to obtain a fault check result.

22. The system according to claim 21, wherein the target data management apparatus is further configured to:
when the fault check result indicates that the data stored in the private ledger is tampered with or deleted, or a storage mounted to the target data management apparatus is faulty, perform fault recovery based on the blockchain ledger.

23. A data management apparatus, wherein the data management apparatus corresponds to a blockchain node in a blockchain network, and the data management apparatus comprises:
a communication module, configured to receive a transaction request from a blockchain client, wherein the transaction request comprises identifiers of transaction participants; and
a management module, configured to perform input/output I/O on a transaction information ciphertext in the blockchain network based on the transaction request, wherein the transaction information ciphertext is obtained by encrypting a transaction information plaintext by using a key that is invisible to a participant other than the transaction participant, wherein
the communication module is further configured to return a transaction result to the blockchain client.

24. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 11.

25. A computer-readable storage medium, comprising computer-readable instructions, wherein the computer-readable instructions are used to implement the method according to any one of claims 1 to 11.

26. A computer program product, comprising computer-readable instructions, wherein the computer-readable instructions are used to implement the method according to any one of claims 1 to 11.
